# EUROPEAN PATENT APPLICATION

(11) **EP 4 455 865 A1**
(43) Date of publication of application: **30.10.2024**
(21) Application number: 23203659.0
(22) Date of filing: 13.10.2023
(51) Int. Cl.: G06F 8/65, G06F 8/656, G06F 9/455

(54) **PREDICTIVE RESOURCE MEASUREMENT FOR OPERATOR PROCESS UPGRADES**

(30) Priority: 28.04.2023 US 202318308848
(71) Applicant: Red Hat, Inc., Raleigh, NC 27601 (US)
(72) Inventor: GALLAGHER, Brian, Raleigh (US); BROWNE, Michael, Raleigh (US)
(74) Representative: Murgitroyd & Company

(57) **Abstract**

A computing device determines that an executing first operator process is to be upgraded to a second operator process in an upgrade process, wherein the first operator process maintains on a cluster of compute nodes a desired identified state of an application. The computing device prior to initiating the second operator process, determines that the upgrade process will cause an initiation of a new container of the application to replace an existing container of the application. The computing device determines that an upgrade mode associated with the first operator process is a rolling upgrade mode, wherein the existing container and the new container will execute concurrently for a period of time. The computing device makes a determination whether computing resources needed to execute the existing container and the new container concurrently are available. The computing device takes an upgrade request action based on the determination.

## Description

### BACKGROUND

Container orchestration systems automate the deployment, scaling, and management of containerized applications among nodes in a cluster. An operator process of the container orchestration system can manage deployments of containerized applications among nodes in a cluster. As an operator process performs an upgrade, deployments may also be upgraded, causing an increase in computing resources that the nodes in the cluster may not currently have.

### SUMMARY

The examples disclosed herein implement predictive resource measurement for operator process upgrades. An operator process is to perform an upgrade that includes the upgrade of a deployment where an existing container is to be replaced with a new container among the nodes in the cluster. The computing resources required for the operator process upgrade can be calculated and used to determine whether the computing resources required for the operator process upgrade are available. Based on the determination, the operator process upgrade may be performed, or another action may be taken in order for the operator process to be able to upgrade without degradation of performance of the container orchestration system.

According to an aspect of the present disclosure there is provided a method comprising the steps of:
determining, by a container orchestration system (COS) executing on a computing device, that an executing first operator process is to be upgraded to a second operator process in an upgrade process, wherein the first operator process maintains on a cluster of compute nodes a desired identified state of an application;
prior to initiating the second operator process, determining, by the COS, that the upgrade process will cause an initiation of a new container of the application to replace an existing container of the application; determining, by the COS, that an upgrade mode associated with the first operator process is a rolling upgrade mode, wherein the existing container and the new container will execute concurrently for a period of time;
making a determination, by the COS, whether computing resources needed to execute the existing container and the new container concurrently are available; and
taking, by the COS, an upgrade request action based on the determination.

Determining that an executing first operator process is to be upgraded to a second operator process in an upgrade process may comprise obtaining a resource file that corresponds to the first operator process, wherein the resource file is used to instantiate a resource, and determining, based on the resource, that a desired state of the resource differs from a current state of the resource.

Determining that the upgrade process will cause an initiation of a new container of the application to replace an existing container of the application may comprise obtaining a first file that corresponds to the first operator process and a second file that corresponds to the second operator process, wherein the first file identifies a container image for the existing container and the second file identifies a container image for the new container, and determining that the container image for the existing container and the container image for the new container differ. The first file may include at least one deployment associated with the first operator process that includes the container image for the existing container and the second file may include at least one deployment associated with the second operator process that includes the container image for the new container. Obtaining the first file and the second file may comprise sending the first file and the second file to an operator manager platform.

Determining that an upgrade mode associated with the first operator process is a rolling upgrade mode may comprise obtaining a file that corresponds to the first operator process, wherein the file includes at least one deployment associated with the first operator process, and determining, based on the file, that the at least one deployment in the file comprises a rolling upgrade mode.

Making a determination whether computing resources needed to execute the existing container and the new container concurrently are available may comprise obtaining a first file that corresponds to the first operator process and identifies the existing container, wherein the first file identifies computing resources needed to execute the existing container, obtaining a second file that corresponds to the second operator process and identifies the new container, wherein the second file identifies computing resources needed to execute the new container, calculating an expected amount of computing resources, wherein the expected amount of computing resources comprises the computing resources needed to execute the existing container and the computing resources needed to execute the new container, identifying computing resources available in the cluster of compute nodes. Identifying computing resources available in the cluster of compute nodes may comprise identifying each container in the cluster of compute nodes, wherein the cluster of compute nodes comprises a plurality of containers, determining computing resources needed for each container in the cluster of compute nodes, determining computing resources provisioned for each node of the compute nodes, wherein each container in the cluster of compute nodes is hosted on at least one node of the cluster of compute nodes, and calculating a difference between the computing resources provisioned for each node of the compute nodes and the computing resources needed for each container in the cluster of compute nodes, wherein the computing resources available in the cluster of compute nodes comprises the difference between the computing resources provisioned for each node of the compute nodes and the computing resources needed for each container in the cluster of compute nodes. Taking an upgrade request action based on this determination may comprise performing an upgrade of the executing first operator process to the second operator process, wherein the upgrade request action comprises performing the upgrade of the executing first operator process to the second operator process.

The method may then comprise determining that the expected amount of computing resources is less than the computing resources available in the cluster of compute nodes. Taking an upgrade request action based on this determination may comprise performing an upgrade of the executing first operator process to the second operator process, and the upgrade request action may comprise performing the upgrade of the executing first operator process to the second operator process.

Alternatively, the method may then comprise determining that the expected amount of computing resources is greater than the computing resources available in the cluster of compute nodes. Taking an upgrade request action based on this determination may comprise stopping an upgrade of the executing first operator process to the second operator process, and the upgrade request action may comprise stopping the upgrade of the executing first operator process to the second operator process. Subsequent to stopping the upgrade of the executing first operator process to the second operator process, an alert may be sent that indicates that there are insufficient computing resources to perform the upgrade of the executing first operator process to the second operator process.

In response to determining that the expected amount of computing resources is greater than the computing resources available in the cluster of compute nodes, the method may further comprise separating the upgrade of the executing first operator process to the second operator process into subsets, wherein taking an upgrade request action based on the determination comprises performing each subset sequentially, and the upgrade request action comprises performing each subset sequentially.

Alternatively, in response to this determination, the method may further comprise determining a difference between the expected amount of computing resources and the computing resources available in the cluster of compute nodes, requesting a new compute node with computing resources of at least the difference between the expected amount of computing resources and the computing resources available in the cluster of compute nodes, and provisioning the new compute node in the cluster of compute nodes, wherein taking an upgrade request action based on the determination comprises performing an upgrade of the executing first operator process to the second operator process and the upgrade request action comprises performing the upgrade of the executing first operator process to the second operator process. The method may further comprise determining that the computing resources available in the cluster of compute nodes exceed an amount of computing resources needed for the cluster of compute nodes, determining that the new compute node can be removed from the cluster of compute nodes, and removing the new compute node from the cluster of compute nodes.

Alternatively, in response to this determination, the method may further comprise obtaining a file that corresponds to the first operator process, wherein the file includes at least one deployment associated with the first operator process, updating the file to identify that the at least one deployment in the file comprises a recreate upgrade mode, wherein the existing container will terminate before the new container will execute, and determining that the existing container terminated, wherein taking an upgrade request action based on the determination comprises performing an upgrade of the executing first operator process to the second operator process, and the upgrade request action comprises performing the upgrade of the executing first operator process to the second operator process.

According to a further aspect of the present disclosure there is provided a computing device, comprising:
a memory; and
a processor device coupled to the memory, the processor device configured to:
   determine that an executing first operator process is to be upgraded to a second operator process in an upgrade process, wherein the first operator process maintains on a cluster of compute nodes a desired identified state of an application;
   prior to initiate the second operator process, determine that the upgrade process will cause an initiation of a new container of the application to replace an existing container of the application;
   determine that an upgrade mode associated with the first operator process is a rolling upgrade mode, wherein the existing container and the new container will execute concurrently for a period of time;
   make a determination whether computing resources needed to execute the existing container and the new container concurrently are available; and
   take an upgrade request action based on the determination.

The processor device may be configured to determine that the upgrade process will cause an initiation of a new container of the application to replace an existing container of the application by obtaining a first file that corresponds to the first operator process and a second file that corresponds to the second operator process, wherein the first file identifies a container image for the existing container and the second file identifies a container image for the new container, and determining that the container image for the existing container and the container image for the new container differ. The first file may include at least one deployment associated with the first operator process that includes the container image for the existing container and the second file may include at least one deployment associated with the second operator process that includes the container image for the new container. The processor device may be configured to obtain the first file and the second file by sending the first file and the second file to an operator manager platform.

The processor device may be configured to determine that an upgrade mode associated with the first operator process is a rolling upgrade mode by obtaining a file that corresponds to the first operator process, wherein the file includes at least one deployment associated with the first operator process, and determining, based on the file, that the at least one deployment in the file comprises a rolling upgrade mode.

The processor device may be configured to make a determination whether computing resources needed to execute the existing container and the new container concurrently are available by obtaining a first file that corresponds to the first operator process and identifies the existing container, wherein the first file identifies computing resources needed to execute the existing container, obtaining a second file that corresponds to the second operator process and identifies the new container, wherein the second file identifies computing resources needed to execute the new container, calculating an expected amount of computing resources, wherein the expected amount of computing resources comprises the computing resources needed to execute the existing container and the computing resources needed to execute the new container, identifying computing resources available in the cluster of compute nodes. The processor device may be configured to identify computing resources available in the cluster of compute nodes by identifying each container in the cluster of compute nodes, wherein the cluster of compute nodes comprises a plurality of containers, determining computing resources needed for each container in the cluster of compute nodes, determining computing resources provisioned for each node of the compute nodes, wherein each container in the cluster of compute nodes is hosted on at least one node of the cluster of compute nodes, and calculating a difference between the computing resources provisioned for each node of the compute nodes and the computing resources needed for each container in the cluster of compute nodes, wherein the computing resources available in the cluster of compute nodes comprises the difference between the computing resources provisioned for each node of the compute nodes and the computing resources needed for each container in the cluster of compute nodes. The processor device may be configured to take an upgrade request action based on this determination by performing an upgrade of the executing first operator process to the second operator process, wherein the upgrade request action comprises performing the upgrade of the executing first operator process to the second operator process.

The processor device may be configured to then determine that the expected amount of computing resources is less than the computing resources available in the cluster of compute nodes. The processor device may be configured to take an upgrade request action based on this determination by performing an upgrade of the executing first operator process to the second operator process, and the upgrade request action may comprise performing the upgrade of the executing first operator process to the second operator process.

Alternatively, the processor device may be configured to then determine that the expected amount of computing resources is greater than the computing resources available in the cluster of compute nodes. The processor device may be configured to take an upgrade request action based on this determination by stopping an upgrade of the executing first operator process to the second operator process, and the upgrade request action may comprise stopping the upgrade of the executing first operator process to the second operator process. Subsequent to stopping the upgrade of the executing first operator process to the second operator process, the processor device may be configured to send an alert that indicates that there are insufficient computing resources to perform the upgrade of the executing first operator process to the second operator process.

In response to determining that the expected amount of computing resources is greater than the computing resources available in the cluster of compute nodes, the processor device may be configured to separate the upgrade of the executing first operator process to the second operator process into subsets, wherein taking an upgrade request action based on the determination comprises performing each subset sequentially, and the upgrade request action comprises performing each subset sequentially.

Alternatively, in response to this determination, the processor device may be configured to determine a difference between the expected amount of computing resources and the computing resources available in the cluster of compute nodes, request a new compute node with computing resources of at least the difference between the expected amount of computing resources and the computing resources available in the cluster of compute nodes, and provision the new compute node in the cluster of compute nodes, wherein taking an upgrade request action based on the determination comprises performing an upgrade of the executing first operator process to the second operator process and the upgrade request action comprises performing the upgrade of the executing first operator process to the second operator process. The processor device may be further configured to determine that the computing resources available in the cluster of compute nodes exceed an amount of computing resources needed for the cluster of compute nodes, determine that the new compute node can be removed from the cluster of compute nodes, and remove the new compute node from the cluster of compute nodes.

Alternatively, in response to this determination, the processor device may be further configured to obtain a file that corresponds to the first operator process, wherein the file includes at least one deployment associated with the first operator process, update the file to identify that the at least one deployment in the file comprises a recreate upgrade mode, wherein the existing container will terminate before the new container will execute, and determine that the existing container terminated, wherein taking an upgrade request action based on the determination comprises performing an upgrade of the executing first operator process to the second operator process, and the upgrade request action comprises performing the upgrade of the executing first operator process to the second operator process.

According to a still further aspect of the present disclosure there is provided a non-transitory computer-readable storage medium that includes computer-executable instructions that, when executed, cause one or more processor devices to:
determine that an executing first operator process is to be upgraded to a second operator process in an upgrade process, wherein the first operator process maintains on a cluster of compute nodes a desired identified state of an application;
prior to initiate the second operator process, determine that the upgrade process will cause an initiation of a new container of the application to replace an existing container of the application;
determine that an upgrade mode associated with the first operator process is a rolling upgrade mode, wherein the existing container and the new container will execute concurrently for a period of time;
make a determination whether computing resources needed to execute the existing container and the new container concurrently are available; and
take an upgrade request action based on the determination.

The processor device may be caused to determine that the upgrade process will cause an initiation of a new container of the application to replace an existing container of the application by obtaining a first file that corresponds to the first operator process and a second file that corresponds to the second operator process, wherein the first file identifies a container image for the existing container and the second file identifies a container image for the new container, and determining that the container image for the existing container and the container image for the new container differ. The first file may include at least one deployment associated with the first operator process that includes the container image for the existing container and the second file may include at least one deployment associated with the second operator process that includes the container image for the new container. The processor device may be configured to obtain the first file and the second file by sending the first file and the second file to an operator manager platform.

The processor device may be caused to determine that an upgrade mode associated with the first operator process is a rolling upgrade mode by obtaining a file that corresponds to the first operator process, wherein the file includes at least one deployment associated with the first operator process, and determining, based on the file, that the at least one deployment in the file comprises a rolling upgrade mode.

The processor device may be caused to make a determination whether computing resources needed to execute the existing container and the new container concurrently are available by obtaining a first file that corresponds to the first operator process and identifies the existing container, wherein the first file identifies computing resources needed to execute the existing container, obtaining a second file that corresponds to the second operator process and identifies the new container, wherein the second file identifies computing resources needed to execute the new container, calculating an expected amount of computing resources, wherein the expected amount of computing resources comprises the computing resources needed to execute the existing container and the computing resources needed to execute the new container, identifying computing resources available in the cluster of compute nodes. The processor device may be caused to identify computing resources available in the cluster of compute nodes by identifying each container in the cluster of compute nodes, wherein the cluster of compute nodes comprises a plurality of containers, determining computing resources needed for each container in the cluster of compute nodes, determining computing resources provisioned for each node of the compute nodes, wherein each container in the cluster of compute nodes is hosted on at least one node of the cluster of compute nodes, and calculating a difference between the computing resources provisioned for each node of the compute nodes and the computing resources needed for each container in the cluster of compute nodes, wherein the computing resources available in the cluster of compute nodes comprises the difference between the computing resources provisioned for each node of the compute nodes and the computing resources needed for each container in the cluster of compute nodes. The processor device may be caused to take an upgrade request action based on this determination by performing an upgrade of the executing first operator process to the second operator process, wherein the upgrade request action comprises performing the upgrade of the executing first operator process to the second operator process.

The processor device may be caused to then determine that the expected amount of computing resources is less than the computing resources available in the cluster of compute nodes. The processor device may be caused to take an upgrade request action based on this determination by performing an upgrade of the executing first operator process to the second operator process, and the upgrade request action may comprise performing the upgrade of the executing first operator process to the second operator process.

Alternatively, the processor device may be caused to then determine that the expected amount of computing resources is greater than the computing resources available in the cluster of compute nodes. The processor device may be caused to take an upgrade request action based on this determination by stopping an upgrade of the executing first operator process to the second operator process, and the upgrade request action may comprise stopping the upgrade of the executing first operator process to the second operator process. Subsequent to stopping the upgrade of the executing first operator process to the second operator process, the processor device may be caused to send an alert that indicates that there are insufficient computing resources to perform the upgrade of the executing first operator process to the second operator process.

In response to determining that the expected amount of computing resources is greater than the computing resources available in the cluster of compute nodes, the processor device may be caused to separate the upgrade of the executing first operator process to the second operator process into subsets, wherein taking an upgrade request action based on the determination comprises performing each subset sequentially, and the upgrade request action comprises performing each subset sequentially.

Alternatively, in response to this determination, the processor device may be caused to determine a difference between the expected amount of computing resources and the computing resources available in the cluster of compute nodes, request a new compute node with computing resources of at least the difference between the expected amount of computing resources and the computing resources available in the cluster of compute nodes, and provision the new compute node in the cluster of compute nodes, wherein taking an upgrade request action based on the determination comprises performing an upgrade of the executing first operator process to the second operator process and the upgrade request action comprises performing the upgrade of the executing first operator process to the second operator process. The processor device may be further caused to determine that the computing resources available in the cluster of compute nodes exceed an amount of computing resources needed for the cluster of compute nodes, determine that the new compute node can be removed from the cluster of compute nodes, and remove the new compute node from the cluster of compute nodes.

Alternatively, in response to this determination, the processor device may be further caused to obtain a file that corresponds to the first operator process, wherein the file includes at least one deployment associated with the first operator process, update the file to identify that the at least one deployment in the file comprises a recreate upgrade mode, wherein the existing container will terminate before the new container will execute, and determine that the existing container terminated, wherein taking an upgrade request action based on the determination comprises performing an upgrade of the executing first operator process to the second operator process, and the upgrade request action comprises performing the upgrade of the executing first operator process to the second operator process.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of a runtime environment in which examples of predictive resource measurement for operator process upgrades may be practiced;
Figure 2 is a flowchart of a method for predictive resource measurement for operator process upgrades in the runtime environment of Figure 1, according to one example;
Figure 3A is a block diagram of the runtime environment of Figure 1 for predictive resource measurement for operator process upgrades, according to one example;
Figure 3B is a block diagram of the runtime environment of Figure 1 for predictive resource measurement for operator process upgrades, according to one example;
Figure 3C is a block diagram of the runtime environment of Figure 1 for predictive resource measurement for operator process upgrades, according to one example;
Figure 4 is a block diagram of the runtime environment of Figure 1 for predictive resource measurement for operator process upgrades, according to one example;
Figure 5 is a block diagram of the runtime environment of Figure 1 for predictive resource measurement for operator process upgrades, according to one example;
Figure 6 is a block diagram of the runtime environment of Figure 1 for predictive resource measurement for operator process upgrades, according to one example;
Figure 7 is a flowchart illustrating operations performed in the runtime environment of Figure 1 for predictive resource measurement for operator process upgrades, according to one example;
Figure 8 is a flowchart of a method for predictive resource measurement for operator process upgrades in the runtime environment of Figure 1 for predictive resource measurement for operator process upgrades, according to one example;
Figure 9 is a block diagram of the runtime environment of Figure 1 for predictive resource measurement for operator process upgrades, according to one example;
Figure 10 is a block diagram of the runtime environment of Figure 1 for predictive resource measurement for operator process upgrades, according to one example;
Figure 11 is a block diagram of a computing device suitable for implementing aspects illustrated in Figures 1-10 according to one example;
Figure 12 is a block diagram of a computing device suitable for predictive resource measurement for operator process upgrades, according to one example;
Figure 13 is a block diagram of the runtime environment of Figure 1 for predictive resource measurement for operator process upgrades, according to one example; and
Figure 14 is a block diagram of a runtime environment suitable for implementing examples, according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the elements unless otherwise explicitly specified. The word "or" as used herein and in the claims is inclusive unless contextually impossible. As an example, the recitation of A or B means A, or B, or both A and B. The word "data" may be used herein in the singular or plural depending on the context.

Containerization technologies, such as, by way of non-limiting example, Docker^{®} container technology, Kubernetes^{®} container technology, CoreOS (Rocket) container technology, Tectonic container technology, and the like, are increasingly popular due, in part, to their relatively low resource requirements compared to other process isolation mechanisms, such as virtual machines. Entities that utilize container technologies often prefer that all processes executed in a computing environment be capable of being containerized and run as containers.

Container orchestration systems automate the deployment, scaling, and management of containerized applications among nodes in a cluster. A containerized application may include tens or hundreds of different containers and other resources, and each container or resource may have any number of instances distributed over many different nodes in a cluster. Increasingly, especially in conjunction with cloud computing environments, a containerized application may be distributed over many different nodes in several different clusters.

An operator process of the container orchestration system can manage deployments of containerized applications among nodes in a cluster. As an operator process performs an upgrade, deployments may also be upgraded, causing an increase in computing resources that the nodes in the cluster may not currently have. Attempting to upgrade an operator process when there are insufficient computing resources can cause downtime and instability in a containerization environment.

The examples disclosed herein implement predictive resource measurement for operator process upgrades. An operator process may be ready to be upgraded, which can include the upgrade of a deployment where an existing container is to be replaced with a new container among the nodes in the cluster. The deployment may be a rolling deployment mode, where the existing container and the new container are to run concurrently during the upgrade, therefore there must be sufficient computing resources to allow both the existing container and the new container to run concurrently without interrupting the execution of the cluster. The computing resources required for the operator process upgrade can be calculated and used to determine whether the computing resources required for the operator process upgrade are available in the cluster. Based on the determination, the operator process upgrade may be performed, or another action may be taken in order for the operator process to be able to upgrade without degradation of performance of the container orchestration system. For instance, the operator process upgrade may be stopped, separated into segments for a phased roll out of each segment separately, a new node may be provisioned in the cluster, or the deployment strategy may be changed.

The term "containerized application" as used herein refers to an application that comprises one or more container images, and is initiated and managed via a container orchestration system. The term "containerized instance" as used herein refers to an entity that includes a container that is initiated from a container image. The phrase "container" as used herein refers to Linux^{®} containers wherein the Linux^{®} kernel uses namespaces to isolate processes from one another. The phrase "container image" as used herein refers to a static package of software comprising one or more layers, the layers including everything needed to run an application (i.e., as a container) that corresponds to the container image, including, for example, one or more of executable runtime code, system tools, system libraries and configuration settings. A Docker^{®} image is an example of a container image. When executed, a container image is initiated as a Linux^{®} container, wherein the Linux^{®} kernel features cgroups and namespaces are used to isolate container processes from one another. A container image is often created from a containerization technology, such as, by way of non-limiting example, Docker^{®}, or the like. The term "container orchestration system" refers to a system that automates the deployment, scaling, and management of containerized applications among nodes in a cluster. A cluster is a set of nodes that run containerized applications. Nodes can be virtual or physical machines that contain the services and resources necessary to run containerized applications. The Kubernetes^{®} container orchestration system (Kubernetes.io) is one example of a container orchestration system. A containerized instance may comprise only a container, or may comprise, for example, a logical grouping of containers in the same namespace such as a Kubernetes^{®} pod. A pod is a logical entity that isolates one or more containers from containers in another pod. A pod is defined via a pod specification which includes information such as an identification of the containers in the pod, the volumes used by the containers in the pod, and the like. The nodes in a cluster can host pods and a node may have one or more pods. The term "resource" as used herein refers to any individual component managed by the container orchestration system for which, if requested, the container orchestration system will return information specific to the resource. In the Kubernetes^{®} container orchestration system, each resource of an application is typically defined in a YAML Ain't Markup Language (YAML) file and has a "kind" attribute (sometimes referred to herein as "type") and a "name" attribute. The term "deployment" refers to a resource or object of the container orchestration system that defines the desired state for a group of replicas of an application and is typically defined in a YAML file, such as a YAML file with a "kind" attribute of "deployment." A deployment controller can change the actual state of the replicas to the desired state at a controlled rate. In the Kubernetes^{®} container orchestration system, a deployment can provide declarative updates for pods. The term "operator process" refers to a method of packaging, deploying, and managing an application in the container orchestration system. In the Kubernetes^{®} container orchestration system, the operator process may be a Kubernetes^{®} operator that uses custom resources to manage applications and their components. Custom resources represent a customization of a particular Kubernetes^{®} installation that allows for the extension of the Kubernetes^{®} API. The operator can interact with the custom resources to maintain a desired state of a containerized application.

The examples will be discussed herein in the context of the Kubernetes^{®} container orchestration system and utilize terminology used in the Kubernetes^{®} container orchestration system; however, the examples are applicable to any container orchestration system capable of deploying, scaling, and managing containerized applications among nodes in a cluster.

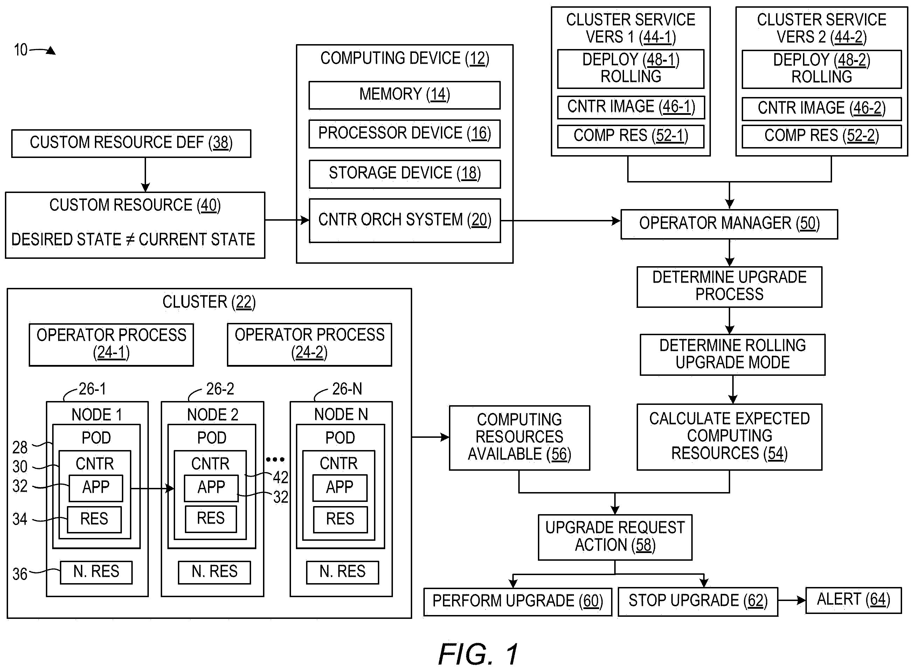

Figure 1 is a block diagram of a runtime environment 10 in which examples of predictive resource measurement for operator process upgrades may be practiced. The runtime environment 10 includes a computing device 12 that comprises a system memory 14, a processor device 16, and a storage device 18. The runtime environment 10 may comprise any containerization technology or containerization technologies, such as, by way of non-limiting example, Open Shift^{®}, Docker^{®}, Kubernetes^{®}, or the like. In some examples, the runtime environment 10 is implemented in a cloud computing environment, such as, by way of non-limiting example, an Amazon Web Services (AWS) or Microsoft Azure cloud computing environment. The computing device 12 includes a container orchestration system 20 that executes on the computing device 12 and performs predictive resource measurement for operator process upgrades. While for purposes of illustration only one computing device 12 is illustrated, in operation, the runtime environment 10 may have hundreds or thousands of computing devices. It is to be understood that the computing device 12 in some examples may include constituent elements in addition to those illustrated in Figure 1.

The runtime environment 10 includes a cluster 22. While for purposes of illustration only one cluster 22 is illustrated, in operation, the runtime environment may have multiple clusters. The cluster 22 includes a first operator process 24-1 and a plurality of nodes 26-1 - 26-N. The container orchestration system 20 can deploy, scale, and manage containerized applications by distributing resources across the plurality of nodes 26-1 - 26-N. The container orchestration system 20 may comprise any suitable container orchestration system capable of deploying containerized applications across a cluster of nodes. The term "deploy" as used herein refers to an installation and/or set up process of a resource on a cluster, but does not necessarily require that the resource be initiated and/or running. In some implementations, the container orchestration system 20 comprises the Kubernetes^{®} container orchestration system. While the container orchestration system 20, solely for purposes of illustration, is illustrated as a single component embodied in the computing device 12, in practice, the container orchestration system 20 may be implemented by any number of modules, such as the cluster 22, and may be in part distributed across the nodes 26-1 - 26-N.

Each node 26-1 - 26-N may comprise a computing host (e.g., a bare metal machine) or a virtual machine. Each node 26-1 - 26-N may contain one or more pods 28, which may contain one or more containers 30. Each container 30 may contain an application 32 that is deployed on the container 30 in the cluster 22 and each container 30 may contain computing resources 34 required to execute the container 30. The first operator process 24-1 can maintain a desired state of an application, such as the application 32, executing on a node of the plurality of nodes 26-1 - 26-N of the cluster 22. Each node 26-1 - 26-N may also contain computing resources 36 provisioned for the containers. The computing resources 34 and the computing resources 36 may include computing resources, such as CPU and memory for the container 30 and node 26-1 respectively, and can be defined by YAML files that define resources that will be used for the application 32. While for purposes of illustration only one container 30 is illustrated, in operation, the runtime environment 10 may have hundreds or thousands of containers 30 executing at any given time. Similarly, the pod 28 and/or the plurality of nodes 26-1 - 26-N may have hundreds or thousands of containers 30 executing at any given time.

The container orchestration system 20 may determine that the first operator process 24-1 is to be upgraded to a second operator process 24-2 in an upgrade process. The container orchestration system 20 may determine that the first operator process 24-1 is to be upgraded to a second operator process 24-2 by obtaining a resource file 38 that corresponds to the first operator process 24-1. The resource file 38 may be a custom resource definition file in implementations where the container orchestration system 20 comprises the Kubernetes^{®} container orchestration system. A custom resource definition file defines a custom resource and may be a YAML file, which is a static file describing the type of custom resource to be created and the properties of that resource. A custom resource 40 can be the custom resource instantiated via the resource file 38 and is an object that can be added to the cluster. The first operator process 24-1 can monitor the custom resource 40 and interact with an API to cause the cluster 22 to match the desired state of the custom resource 40. An operator process, such as the first operator process 24-1, can have one or more custom resources that are associated with and monitored by the first operator process 24-1. The container orchestration system 20 may determine that a desired state of the custom resource 40 differs from a current state of the custom resource 40. For instance, the custom resource 40 can have two data sections, one that specifies the desired state of the custom resource 40 and one that specifies the current state of the custom resource 40, which may differ. The first operator process 24-1 can execute the code of the first operator process 24-1 to move the custom resource 40 from the current state to the desired state, which may require an upgrade of the first operator process 24-1 to the second operator process 24-2.

An example of the custom resource definition YAML file (e.g., the resource file 38) is provided below in Table 1.

### Custom Resource Definition (CRD) YAML

apiVersion: apiextensions.k8s.io/v1 beta1
kind: CustomResourceDefinition
metadata:
   name: crontabs.stable.example.com
   spec:
      group: stable.example.com
      version: v1
      scope: Namespaced
      names:
         plural: crontabs
         singular: crontab
         kind: CronTab
         shortNames:
            - ct

Before initiating the second operator process 24-2, the container orchestration system 20 may determine that the upgrade process will cause the initiation of a new container 42 of the application 32 to replace an existing container 30 of the application 32. The existing container 30 being replaced may be a plurality of existing containers and the new container 42 being initiated may be a plurality of new containers in some examples. In order to determine that the upgrade process will cause the initiation of the new container 42 of the application 32 to replace the existing container 30 of the application 32, the container orchestration system 20 may obtain a first file 44-1 that corresponds to the first operator process 24-1 and a second file 44-2 that corresponds to the second operator process 24-2. In implementations where the container orchestration system 20 comprises the Kubernetes^{®} container orchestration system, the first file 44-1 and the second file 44-2 may be cluster service version (CSV) files. A CSV file is a YAML file that contains metadata about the corresponding operator (e.g., the first operator process 24-1, the second operator process 24-2) and describes the deployments associated with the corresponding operator. For instance, a CSV file may describe the container images of a deployment associated with the operator. Each version of an operator can have one versioned CSV file, thus the first operator process 24-1 (i.e., a first version of the operator) may have one CSV file (e.g., the first file 44-1) and the second operator process 24-2 (i.e., a second version of the operator) may have one CSV file (e.g., the second file 44-2). CSV files can be compared to determine whether container images have changed for a particular deployment. The container orchestration system 20 can determine that a container image 46-1 described in the first file 44-1 differs from a container image 46-2 described in the second file 44-2, such as by comparing the two files. The container image 46-1 and the container image 46-2 may be used to instantiate the same application, the application 32, while the container image 46-1 corresponds to the existing container 30 to run the application 32 and the container image 46-2 corresponds to the new container 42 to run the application 32. As a result, the container orchestration system 20 can determine that the upgrade process will cause the initiation of a new container 42 of the application 32 to replace an existing container 30 of the application 32 because the container image 46-1 differs from the container image 46-2. The first file 44-1 may have a deployment 48-1 associated with the first operator process 24-1 and the deployment 48-1 may include the container image 46-1 for the existing container 30. The second file 44-2 may have a deployment 48-2 associated with the second operator process 24-2 and the deployment 48-2 may include the container image 46-2 for the new container 42. Both the first file 44-1 and the second file 44-2 may have more than one container image specified, and the container orchestration system 20 may determine that a subset of the container images differ and that only the subset of container images will be upgraded. In some implementations, the first file 44-1 and the second file 44-2 may be sent to an operator manager 50 platform, such as the Operator Lifecycle Manager (OLM) in the OpenShift^{®} containerization technology. The operator manager 50 can install, update, and manage the lifecycle of operators, such as the first operator process 24-1 and the second operator process 24-2.

An example of the CSV YAML file (e.g., the first file 44-1) is provided below in Table 2.

### Cluster Service Version (CSV) YAML

spec:
install:
   spec:
      deployments:
      - name: etcd-operator-v3.1.1
   spec:
      replicas: 1
      selector:
   match Labels:
      name: etcd-operator
   strategy:
      type: Rolling
      template:
         metadata:
         labels:
         name: etcd-operator
   spec:
      containers:
      - args:
      - /opt/etcd/bin/etcd_operator_run.sh
   env:
      - name: WATCH_NAMESPACE
   valueFrom:
      fieldRef:
      fieldPath: metadata.annotations['olm.targetNamespaces']
         - name: ETCD_OPERATOR_DEFAULT_ETCD_IMAGE
            value: quay.io/etcd-
         - name: ETCD_LOG_LEVEL
      value: INFO
      image: quay.io/etcd-
      imagePullPolicy: IfNotPresent
      livenessProbe:
         httpGet:
         path: /healthy
         port: 8080
      initialDelaySeconds: 10
      periodSeconds: 30
   name: etcd-operator
   readinessProbe:
      httpGet:
      path: /ready
      port: 8080
   initialDelaySeconds: 10
   periodSeconds: 30
   resources: {}
   serviceAccountName: etcd-operator
strategy: deployment

The container orchestration system 20 may determine that an upgrade mode associated with the first operator process 24-1 is a rolling upgrade mode. A rolling upgrade is a type of deployment strategy for upgrading an operator, application, or other component of the containerized environment, where the existing container 30 and the new container 42 will execute concurrently for a period of time. As a result, increased computing resources may be required in order for both the existing container 30 and the new container 42 to execute concurrently. The first file 44-1 may be obtained and read to determine that the deployment 48-1 specified in the first file 44-1 is of a "rolling deployment" type. For example, the first file 44-1 may be a YAML file or a CSV file that defines the deployment type for upgrading an operator as a "rolling deployment," or the second file 44-2 may be a YAML file or a CSV file that defines the deployment type for upgrading an operator as a "rolling deployment."

The container orchestration system 20 may determine whether the computing resources that are necessary to execute both the existing container 30 and the new container 42 concurrently are available. In order to determine whether the computing resources that are necessary to execute both the existing container 30 and the new container 42 concurrently are available, the container orchestration system 20 can obtain the first file 44-1 that corresponds to the first operator process 24-1 and the second file 44-2 that corresponds to the second operator process 24-2. The first file 44-1 can identify the existing container 30 (e.g., by the container image 46-1) and computing resources 52-1 needed to execute the existing container 30. The second file 44-2 can identify the new container 42 (e.g., by the container image 46-2) and computing resources 52-2 needed to execute the new container 42. The computing resources 52-1 and the computing resources 52-2 may be CPU, memory, and storage, as non-limiting examples. The first file 44-1 can be read to obtain the computing resources 52-1 needed to execute the existing container 30 and the second file 44-2 can be read to obtain the computing resources 52-2 needed to execute the new container 42. An expected amount of computing resources 54 can then be calculated by adding the computing resources 52-1 and the computing resources 52-2.

An amount of computing resources available 56 in the cluster 22 can be identified, such CPU, memory, and storage available in the cluster 22, as non-limiting examples. For instance, each container running in the cluster 22, such as the containers running in the pods (e.g., the pod 28) and in the nodes 26-1 - 26-N, can be identified. The computing resources of each container running in the cluster 22, such as the computing resources 34 of the container 30, can be identified and aggregated in order to determine the computing resources that the containers in the cluster 22 require to run. The computing resources that are provisioned for each node 26-1 - 26-N that hosts the containers of the cluster 22, such as the computing resources 36 of the node 26-1, can be identified and aggregated in order to determine the computing resources that the plurality of nodes 26-1 - 26-N in the cluster 22 have for the containers to use. The amount of computing resources available 56 in the cluster 22 can be determined by calculating a difference between the aggregated computing resources of each container running in the cluster 22 and the aggregated computing resources that are provisioned for each node 26-1 - 26-N. The difference is the amount of computing resources available 56 in the cluster 22, as these computing resources are provisioned for the nodes 26-1 - 26-N but not in use by the containers hosted on the nodes 26-1 - 26-N in the cluster 32.

In some examples, the container orchestration system 20 may compare the expected amount of computing resources 54 and the amount of computing resources available 56 in the cluster 22 to determine that the expected amount of computing resources 54 is less than the amount of computing resources available 56 in the cluster 22. In response to this validation that there are sufficient computing resources for the upgrade of the first operator process 24-1 to the second operator process 24-2, the container orchestration system 20 can take an upgrade request action 58, which may be to perform the upgrade 60 of the first operator process 24-1 to the second operator process 24-2, as there are sufficient computing resources available in the cluster 22 for the amount of computing resources that the upgrade is expected to consume.

In other examples, the container orchestration system 20 may compare the expected amount of computing resources 54 and the amount of computing resources available 56 in the cluster 22 to determine that the expected amount of computing resources 54 is greater than the amount of computing resources available 56 in the cluster 22. In response, the container orchestration system 20 can take an upgrade request action 58, which may be to stop the upgrade 62 of the first operator process 24-1 to the second operator process 24-2. After stopping the upgrade 62, an alert 64 can be sent to a user, a computing device, such as the computing device 12, or to another component of the runtime environment 10, that indicates that there are insufficient computing resources to perform the upgrade of the first operator process 24-1 to the second operator process 24-2. For example, the alert 64 may be sent to a user computing device and identify the additional computing resources and quantity of the additional computing resources that will be needed to perform the upgrade of the first operator process 24-1 to the second operator process 24-2, so the user can then provision the correct amount of computing resources to perform the upgrade. In some implementations, a user can configure the container orchestration system 20 to specify the actions to take when the expected amount of computing resources 54 is greater than the amount of computing resources available 56 in the cluster 22. For example, a user may specify a preference for time over resource usage, such as a fast deployment instead of a slow deployment to conserve resources or parallel deployments based on computing resources available 56 in the cluster 22 to perform the upgrade at a pace the cluster 22 can handle. The user configurations may be an extension or configuration file for the operator manager 50 to direct the operator manager 50 on how to perform the upgrade of the first operator process 24-1 to the second operator process 24-2.

It is to be understood that, because the container orchestration system 20 is a component of the computing device 12, functionality implemented by the container orchestration system 20 may be attributed to the computing device 12 generally. Moreover, in examples where the container orchestration system 20 comprises software instructions that program the processor device 16 to carry out functionality discussed herein, functionality implemented by the container orchestration system 20 may be attributed herein to the processor device 16. It is to be further understood that while, for purposes of illustration only, the container orchestration system 20 is depicted as a single component, the functionality implemented by the container orchestration system 20 may be implemented in any number of components, and the examples discussed herein are not limited to any particular number of components.

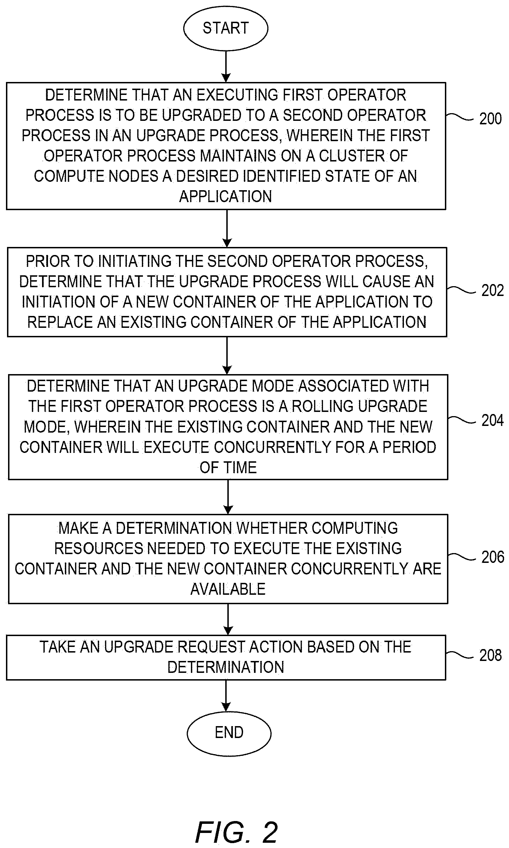

Figure 2 is a flowchart of a method for predictive resource measurement for operator process upgrades in the runtime environment of Figure 1, according to one example. Elements of Figure 1 are referenced in describing Figure 2 for the sake of clarity. In Figure 2, operations begin with a processor device of a computing device, such as the processor device 16 of the computing device 12 of Figure 1, to determine that an executing first operator process is to be upgraded to a second operator process in an upgrade process, wherein the first operator process maintains on a cluster of compute nodes a desired identified state of an application (block 200). The processor device 16 is then to prior to initiate the second operator process, determine that the upgrade process will cause an initiation of a new container of the application to replace an existing container of the application (block 202). The processor device 16 is then to determine that an upgrade mode associated with the first operator process is a rolling upgrade mode, wherein the existing container and the new container will execute concurrently for a period of time (block 204). The processor device 16 is then to make a determination whether computing resources needed to execute the existing container and the new container concurrently are available (block 206). The processor device 16 is then to take an upgrade request action based on the determination (block 208).

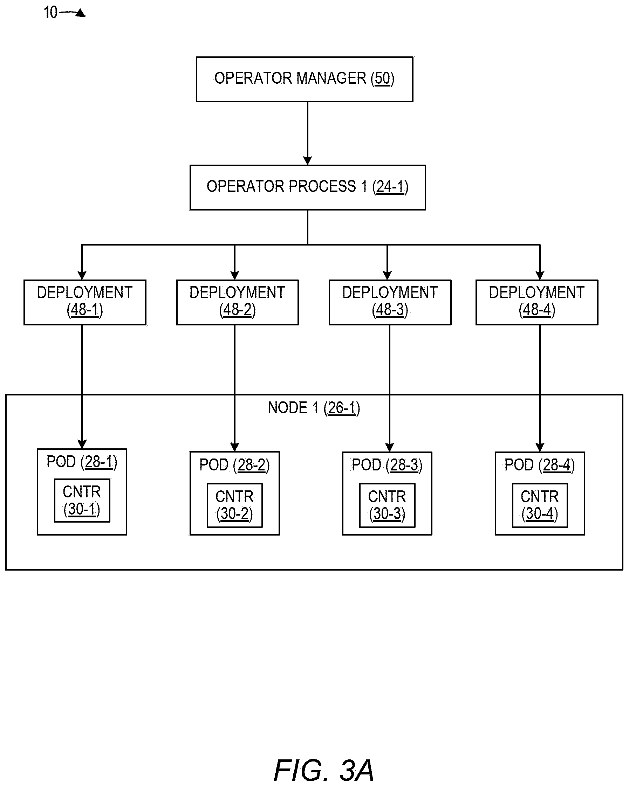

Figures 3A-3C are block diagrams of the runtime environment of Figure 1 for predictive resource measurement for operator process upgrades, according to one example. Elements of Figure 1 are referenced in describing Figures 3A-3C for the sake of clarity. In the example of Figure 3A, prior to an upgrade process where the first operator process 24-1 is to be upgraded to the second operator process 24-2, a baseline of the runtime environment 10 is implemented. For example, the first operator process 24-1 may manage deployments 48-1 - 48-4, each with a pod 28-1 - 28-4 on node 26-1, and each pod running a container 30-1 - 30-4. Each container or pod may have 5GB of memory, for a total of 20GB of memory on node 26-1, before the upgrade process. The first operator process 24-1 is managing deployments 48-1 - 48-4, so when the first operator process 24-1 is upgraded to the second operator process 24-2, the deployments 48-1 - 48-4 may also be upgraded. In some implementations, the operator manager 50 can install, update, and manage the lifecycle of the first operator process 24-1.

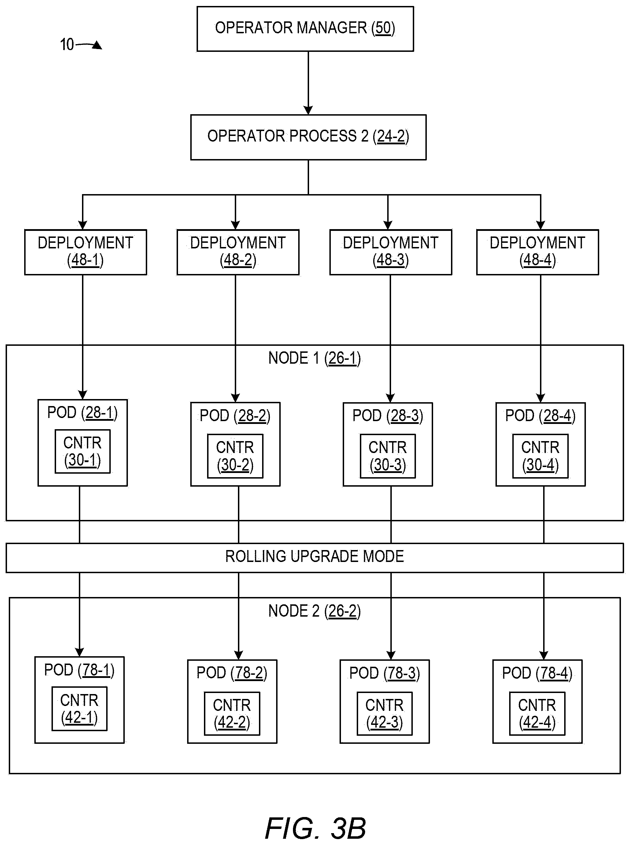

In the example of Figure 3B, the runtime environment 10 during an upgrade process where the first operator process 24-1 is to be upgraded to the second operator process 24-2 and the upgrade mode is a rolling upgrade mode, such as when the deployment 48-1 specified in the first file 44-1 is of a "rolling deployment" type, is illustrated. The upgrade process can cause the initiation of a new container to replace an existing container. For example, existing containers 30-1 - 30-4 may be replaced by new containers 42-1 - 42-4. With the rolling upgrade mode, the existing containers 30-1 - 30-4 and the new containers 42-1 - 42-4 will execute concurrently for a period of time. As a result, increased computing resources may be required in order for the existing containers 30-1 - 30-4 and the new containers 42-1 - 42-4 to execute concurrently. For example, each existing container or pod may have 5GB of memory, for a total of 20GB of memory on node 26-1, so during the rolling upgrade, the new containers 42-1 - 42-42-4 or pods 78-1 - 78-4 may also have 5GB of memory each, for a total of 20GB of memory. Therefore, the expected computing resources for the rolling upgrade is 40GB of memory. During the upgrade, the computing resources available in the cluster of compute nodes can also be determined in order to validate whether the 40GB of memory can be fulfilled with the current computing resource availability in the cluster. In some implementations, the cluster of compute nodes may be an autoscaling cluster where a new node can be provisioned in order to obtain the expected computing resources for the upgrade process. If the 40GB of memory can be fulfilled with the current computing resource availability in the cluster, then the rolling upgrade can be performed to upgrade the first operator process 24-1 to the second operator process 24-2. If the 40GB of memory cannot be fulfilled with the current computing resource availability in the cluster, then the rolling upgrade cannot be performed and another action will be taken, such as stopping the upgrade, performing a phased rollout of the upgrade, provisioning a new node, or changing the deployment upgrade mode, as non-limiting examples.

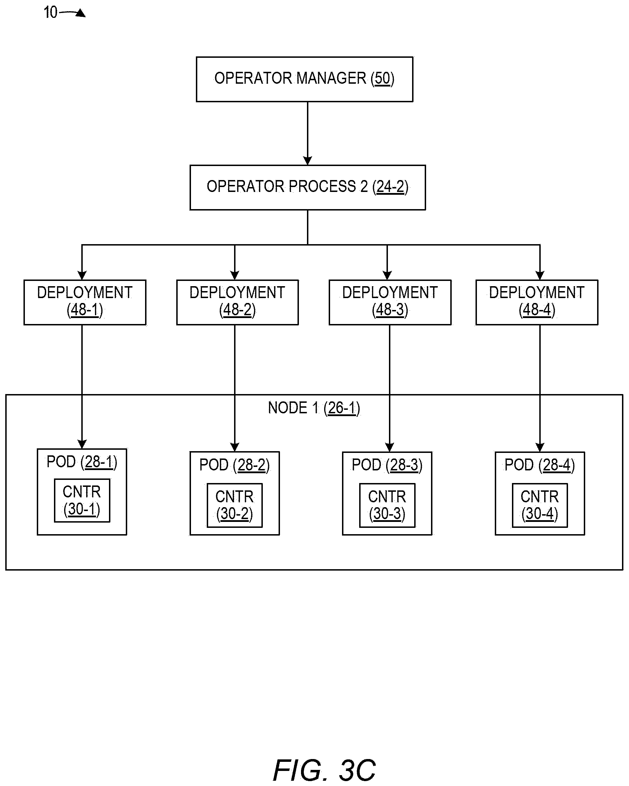

In the example of Figure 3C, after the upgrade process is complete and the first operator process 24-1 is upgraded to the second operator process 24-2, the baseline of the runtime environment 10 may be obtained again. For example, the rolling upgrade process can be performed and completed, so the containers 42-1 - 42-42-4 or pods 78-1 - 78-4 with 5GB of memory each, for a total of 20GB of memory on node 26-2, are no longer needed. The remaining resources in the runtime environment 10 may include the deployments 48-1 - 48-4, each with a pod 28-1 - 28-4 on node 26-1, and each pod running a container 30-1 - 30-4, all managed by the upgraded second operator process 24-2. In some implementations, the operator manager 50 can install, update, and manage the lifecycle of the second operator process 24-2.

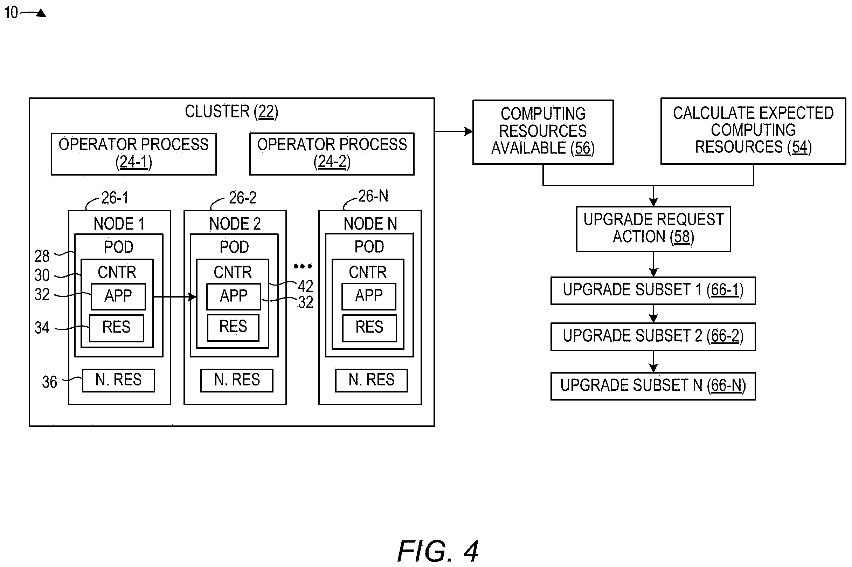

Figure 4 is a block diagram of the runtime environment of Figure 1 for predictive resource measurement for operator process upgrades, according to one example. Elements of Figure 1 are referenced in describing Figure 4 for the sake of clarity. In the example of Figure 4, the container orchestration system 20 may determine that the computing resources that are necessary to execute both the existing container 30 and the new container 42 concurrently are not available. For instance, the container orchestration system 20 may compare the expected amount of computing resources 54 and the amount of computing resources available 56 in the cluster 22 to determine that the expected amount of computing resources 54 is greater than the amount of computing resources available 56 in the cluster 22. In response, the container orchestration system 20 can take the upgrade request action 58, which may be to separate the upgrade of the first operator process 24-1 to the second operator process 24-2 into a plurality of upgrade subsets 66-1 - 66-N and perform each of the upgrade subsets 66-1 - 66-N sequentially in order to decrease computing resource requirements and downtime during the upgrade. The upgrade of the first operator process 24-1 to the second operator process 24-2 may be separated into the plurality of upgrade subsets 66-1 - 66-N based on the container with the most CPU or memory requirements (e.g., the computing resources 34), which may be the first or last segment, while the container with the lowest CPU or memory requirements may be the first or last segment, as non-limiting examples. In some implementations, a user can configure how to separate the upgrade of the first operator process 24-1 to the second operator process 24-2 into the plurality of upgrade subsets 66-1 - 66-N and how to perform the upgrade using the plurality of upgrade subsets 66-1 - 66-N, such as in a manner besides sequentially performing each upgrade subset of the plurality of upgrade subsets 66-1 - 66-N.

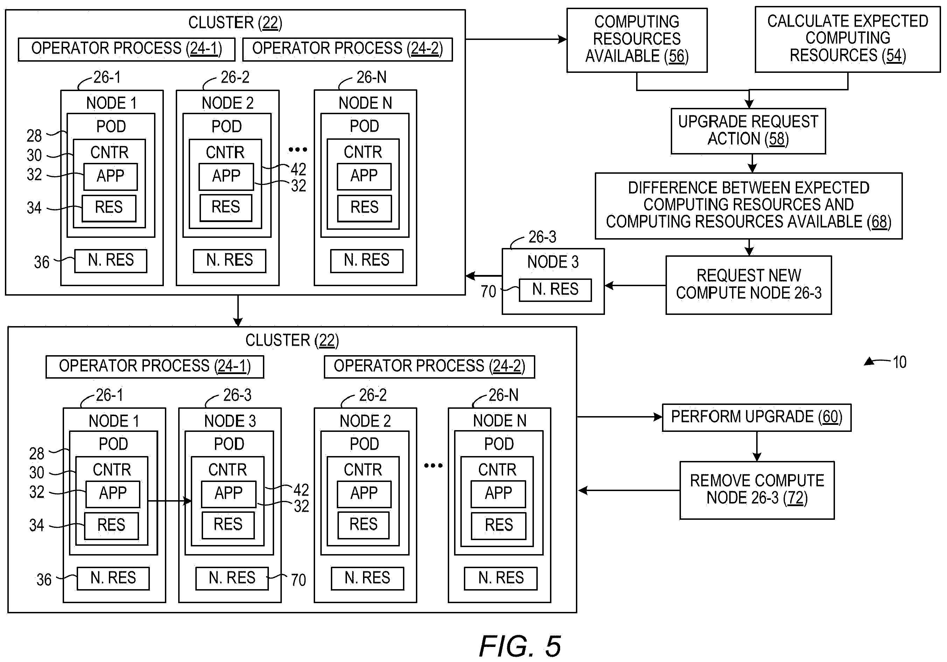

Figure 5 is a block diagram of the runtime environment of Figure 1 for predictive resource measurement for operator process upgrades, according to one example. Elements of Figure 1 are referenced in describing Figure 5 for the sake of clarity. In the example of Figure 5, the container orchestration system 20 may determine that the computing resources that are necessary to execute both the existing container 30 and the new container 42 concurrently are not available. For instance, the container orchestration system 20 may compare the expected amount of computing resources 54 and the amount of computing resources available 56 in the cluster 22 to determine that the expected amount of computing resources 54 is greater than the amount of computing resources available 56 in the cluster 22. In response, the container orchestration system 20 can take the upgrade request action 58, which may be to determine a difference 68 between the expected amount of computing resources 54 and the amount of computing resources available 56, and request and provision a new compute node 26-3 with computing resources 70 of at least the difference 68 between the expected amount of computing resources 54 and the amount of computing resources available 56. For example, the expected amount of computing resources 54 may be 256MB of memory and the amount of computing resources available 56 may be 128MB of memory, resulting in a difference 68 of 128MB, so the new compute node 26-3 may be requested for and provisioned with the computing resources 70 comprising at least 128MB of memory. The new compute node 26-3 can be added to the cluster 22, along with the other nodes in the plurality of nodes 26-1 - 26-N. Provisioning new compute nodes in a cluster is a feature of an autoscaling cluster that is performed when deployments have requests and limits set, which specify in a YAML file the amount of computing resources, such as CPU and memory, each container needs. The provisioning of the new compute node 26-3 can be achieved when the requests and limits are not set by performing these calculations to determine the difference 68 between the expected amount of computing resources 54 and the amount of computing resources available 56, and request and provision new compute nodes for the cluster accordingly. After provisioning the new compute node 26-3 in the cluster 22, the container orchestration system 20 can perform the upgrade 60 of the first operator process 24-1 to the second operator process 24-2.

After performing the upgrade 60, the container orchestration system 20 may determine that the amount of computing resources available 56 in the cluster 22 exceeds an amount of computing resources that are needed for the cluster 22. For instance, the computing resources of each container running in the cluster 22, such as the computing resources 34 of the container 30, can be identified and aggregated in order to determine the computing resources that the containers in the cluster 22 require to run, and the computing resources that are provisioned for each node 26-1 - 26-N that hosts the containers of the cluster 22, such as the computing resources 36 of the node 26-1, can be identified and aggregated in order to determine the computing resources that the plurality of nodes 26-1 - 26-N in the cluster 22 have for the containers to use. The amount of computing resources available 56 in the cluster 22 can be determined by calculating a difference between the aggregated computing resources of each container running in the cluster 22 and the aggregated computing resources that are provisioned for each node 26-1 - 26-N. If there is a positive difference between the aggregated computing resources of each container running in the cluster 22 and the aggregated computing resources that are provisioned for each node 26-1 - 26-N, then there are resources provisioned on the nodes 26-1 - 26-N that are not in use by containers in the cluster. The container orchestration system 20 can then determine that the new compute node 26-3 can be removed from the cluster 22 and remove the new compute node 26-3 from the cluster 22. For instance, the difference between the aggregated computing resources of each container running in the cluster 22 and the aggregated computing resources that are provisioned for each node 26-1 - 26-N may comprise an amount greater than or equal to the computing resources 70 of the new compute node 26-3, allowing the new compute node 26-3 to be removed while providing the containers of the cluster 22 with sufficient computing resources to run.

In another example, the container orchestration system 20 can take the upgrade request action 58, which may be to determine a difference 68 between the expected amount of computing resources 54 and the amount of computing resources available 56, and determine whether there are any nodes from among the plurality of nodes 26-1 - 26-N in reserve and not currently in use that have the computing resources 70 of at least the difference 68. If there is a reserve node with the computing resources 70, then the container orchestration system 20 may start the reserve node with the computing resources 70 and perform the upgrade of the first operator process 24-1 to the second operator process 24-2. If no reserve nodes have the computing resources 70, then the container orchestration system 20 may request and provision a new compute node 26-3 with the computing resources 70.

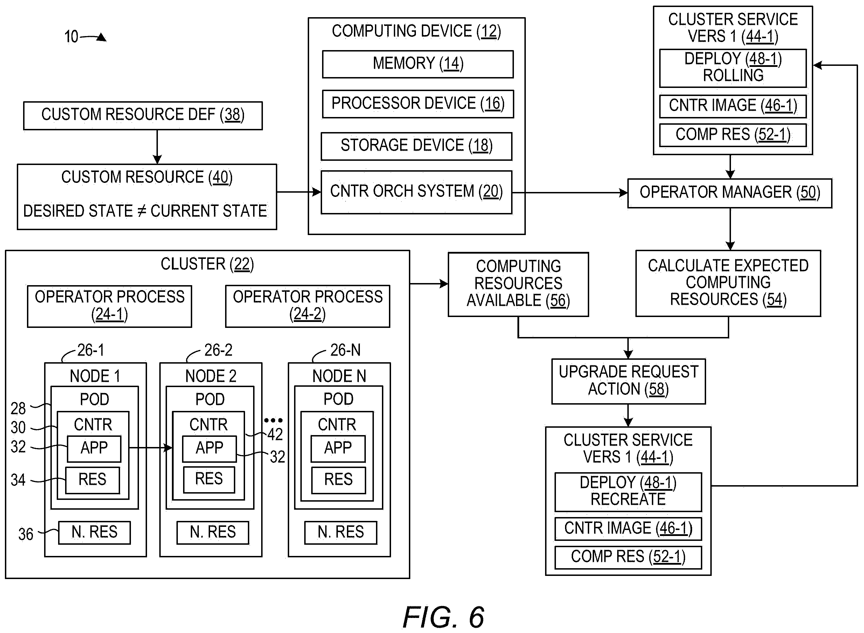

Figure 6 is a block diagram of the runtime environment of Figure 1 for predictive resource measurement for operator process upgrades, according to one example. Elements of Figure 1 are referenced in describing Figure 6 for the sake of clarity. In the example of Figure 6, the container orchestration system 20 may determine that the computing resources that are necessary to execute both the existing container 30 and the new container 42 concurrently are not available. For instance, the container orchestration system 20 may compare the expected amount of computing resources 54 and the amount of computing resources available 56 in the cluster 22 to determine that the expected amount of computing resources 54 is greater than the amount of computing resources available 56 in the cluster 22. In response, the container orchestration system 20 can take the upgrade request action 58, which may be to obtain the first file 44-1 that corresponds to the first operator process 24-1 and includes the deployment 48-1, which may be specified as a "rolling deployment" type. The first file 44-1 can be updated to specify that the deployment 48-1 is instead a "recreate" or other deployment type. In the "recreate" deployment mode, the existing container 30 will terminate before the new container 42 will begin to execute. After updating the first file 44-1 to specify that the deployment type is "recreate," the container orchestration system 20 may determine that the existing container 30 has terminated and then perform the upgrade of the first operator process 24-1 to the second operator process 24-2. In some implementations, the operator manager 50 may update the first file 44-1 to specify that the deployment 48-1 is instead a "recreate" or other deployment type.

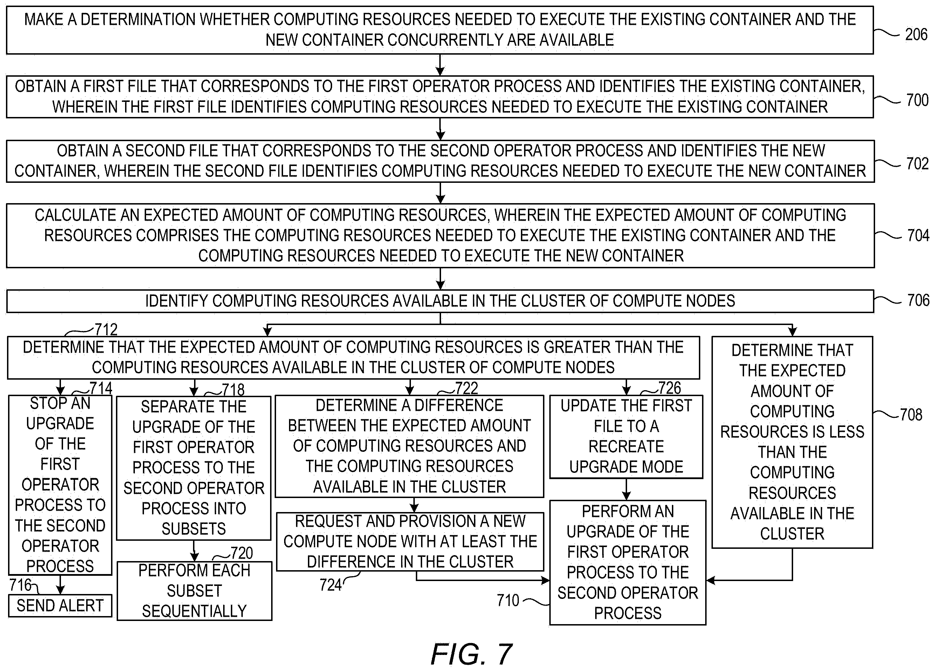

Figure 7 is a flowchart illustrating operations performed in the runtime environment of Figure 1 for predictive resource measurement for operator process upgrades, according to one example. Elements of Figure 1 are referenced in describing Figure 7 for the sake of clarity. In the example of Figure 7, the container orchestration system 20 may make a determination whether computing resources needed to execute the existing container and the new container concurrently are available (block 206). The container orchestration system 20 may then obtain a first file that corresponds to the first operator process and identifies the existing container, wherein the first file identifies computing resources needed to execute the existing container (block 700) and obtain a second file that corresponds to the second operator process and identifies the new container, wherein the second file identifies computing resources needed to execute the new container (block 702). The container orchestration system 20 may then make a calculation based on this information obtained from the first file and the second file. The container orchestration system 20 may calculate an expected amount of computing resources, wherein the expected amount of computing resources comprises the computing resources needed to execute the existing container and the computing resources needed to execute the new container concurrently (block 704). The container orchestration system 20 may then identify computing resources available in the cluster of compute nodes (block 706). Based on the expected amount of computing resources and the identified computing resources available in the cluster of compute nodes, the container orchestration system 20 may then determine that the expected amount of computing resources is less than the computing resources available in the cluster (block 708) and perform an upgrade of the first operator process to the second operator process (block 710), or determine that the expected amount of computing resources is greater than the computing resources available in the cluster of compute nodes (block 712). After determining that the expected amount of computing resources is greater than the computing resources available in the cluster of compute nodes, the container orchestration system 20 may stop an upgrade of the first operator process to the second operator process (block 714) and send an alert (block 716), separate the upgrade of the first operator process to the second operator process into subsets (block 718) and perform each subset sequentially (block 720), determine a difference between the expected amount of computing resources and the computing resources available in the cluster (block 722) and request and provision a new compute node with at least the difference in the cluster (block 724) and then perform an upgrade of the first operator process to the second operator process (block 710), or update the first file to a recreate upgrade mode (block 726) and then perform an upgrade of the first operator process to the second operator process (block 710).

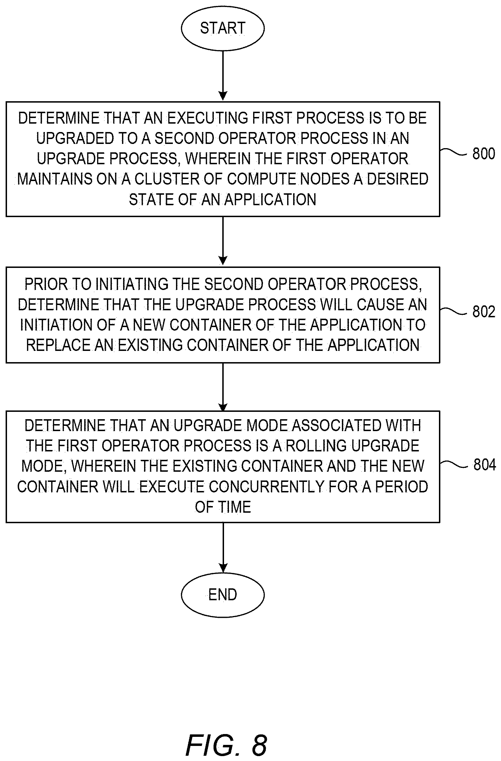

Figure 8 is a flowchart of a method for predictive resource measurement for operator process upgrades in the runtime environment of Figure 1 for predictive resource measurement for operator process upgrades, according to one example. Elements of Figure 1 are referenced in describing Figure 8 for the sake of clarity. In Figure 8, operations begin with a processor device of a computing device, such as the processor device 16 of the computing device 12 of Figure 1, to determine that an executing first operator process is to be upgraded to a second operator process in an upgrade process, wherein the first operator process maintains on a cluster of compute nodes a desired identified state of an application (block 800). The processor device 16 is then to prior to initiate the second operator process, determine that the upgrade process will cause an initiation of a new container of the application to replace an existing container of the application (block 802). The processor device 16 is then to determine that an upgrade mode associated with the first operator process is a rolling upgrade mode, wherein the existing container and the new container will execute concurrently for a period of time (block 804).

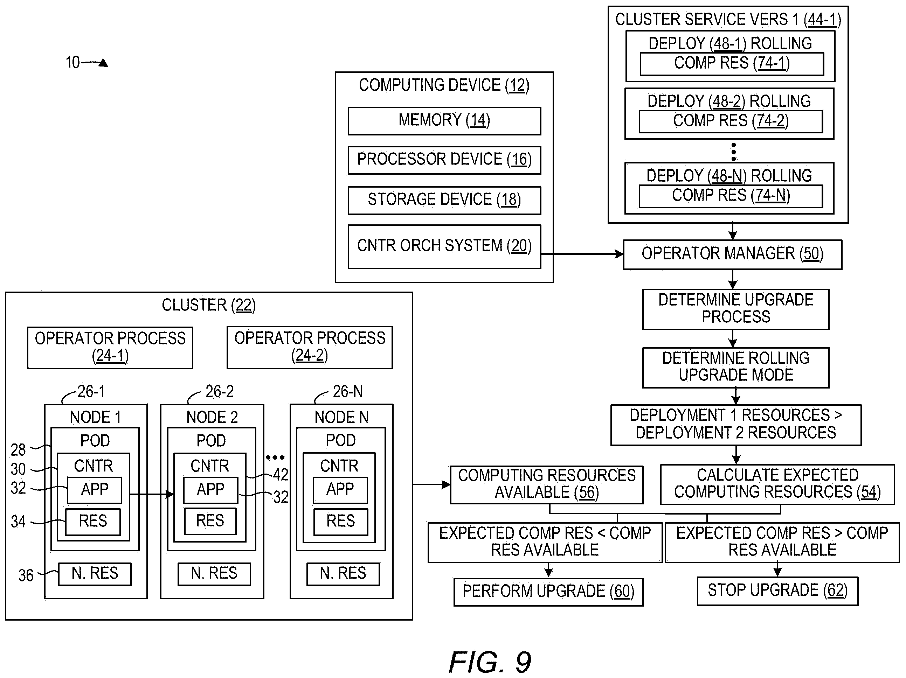

Figure 9 is a block diagram of the runtime environment of Figure 1 for predictive resource measurement for operator process upgrades, according to one example. Elements of Figure 1 are referenced in describing Figure 9 for the sake of clarity. In the example of Figure 9, the container orchestration system 20 may determine that the first operator process 24-1 is to be upgraded to the second operator process 24-2 in an upgrade process. Before initiating the second operator process 24-2, the container orchestration system 20 may determine that the upgrade process will cause an initiation of the new container 42 of the application 32 to replace the existing container 30 of the application 32 and that the upgrade mode associated with the first operator process 24-1 is a rolling upgrade mode where the existing container 30 and the new container 42 will execute concurrently for a period of time. The container orchestration system 20 may then obtain the first file 44-1 that corresponds to the first operator process 24-1 and includes a plurality of deployments 48-1 - 48-N that are associated with the first operator process 24-1. Each deployment of the plurality of deployments 48-1 - 48-N can specify a corresponding amount of computing resources 74-1 - 74-N that the deployment requires. Based on the first file 44-1, the container orchestration system 20 can determine that a deployment of the plurality of deployments 48-1 - 48-N needs more computing resources than the other deployments in the plurality of deployments 48-1 - 48-N. The expected amount of computing resources 54 can be the amount of computing resources that the deployment of the plurality of deployments 48-1 - 48-N which needs the most computing resources requires. The container orchestration system 20 may also identify the amount of computing resources available 56. In some implementations, the container orchestration system 20 may perform a calculation that determines that the expected amount of computing resources 54 is less than the amount of computing resources available 56. Then the container orchestration system 20 can perform the upgrade 60 of the first operator process 24-1 to the second operator process 24-2. In some implementations, the container orchestration system 20 may perform a calculation that determines that the expected amount of computing resources 54 is greater than the amount of computing resources available 56. Then the container orchestration system 20 can stop the upgrade 62 of the first operator process 24-1 to the second operator process 24-2.

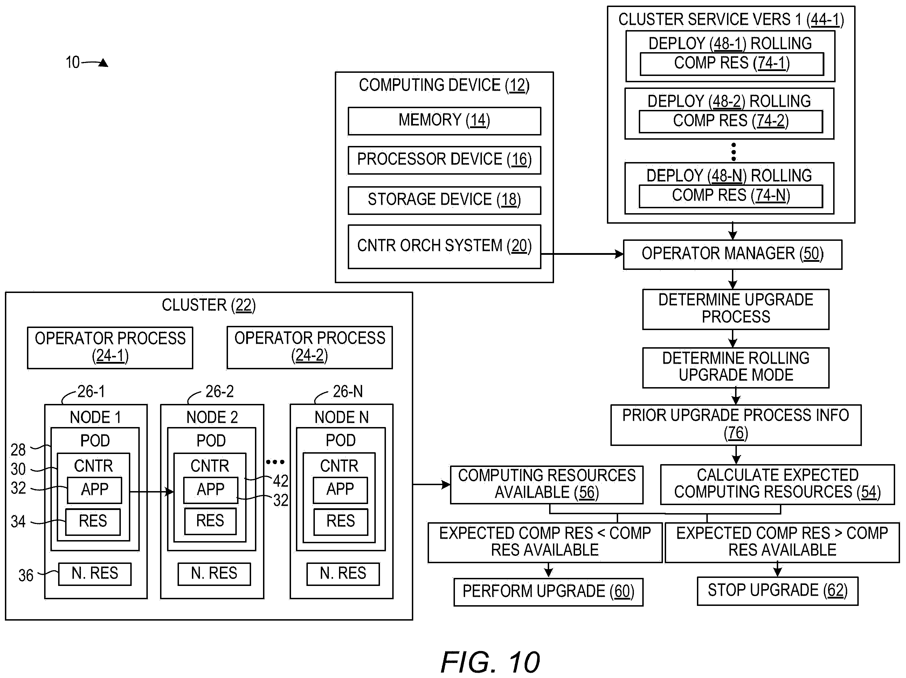

Figure 10 is a block diagram of the runtime environment of Figure 1 for predictive resource measurement for operator process upgrades, according to one example. Elements of Figure 1 are referenced in describing Figure 10 for the sake of clarity. In the example of Figure 10, after determining that the upgrade mode associated with the first operator process 24-1 is a rolling upgrade mode, the container orchestration system 20 may obtain information 76 corresponding to at least one prior upgrade of the first operator process 24-1. The information 76 may include the computing resources that were utilized during the at least one prior upgrade of the first operator process 24-1. Based on the information 76, the container orchestration system 20 may determine the expected amount of computing resources 54, which can be the amount of computing resources that were utilized during the at least one prior upgrade of the first operator process 24-1. The container orchestration system 20 may also identify the amount of computing resources available 56. In some implementations, the container orchestration system 20 may perform a calculation that determines that the expected amount of computing resources 54 is less than the amount of computing resources available 56. Then the container orchestration system 20 can perform the upgrade 60 of the first operator process 24-1 to the second operator process 24-2. In some implementations, the container orchestration system 20 may perform a calculation that determines that the expected amount of computing resources 54 is greater than the amount of computing resources available 56. Then the container orchestration system 20 can stop the upgrade 62 of the first operator process 24-1 to the second operator process 24-2.

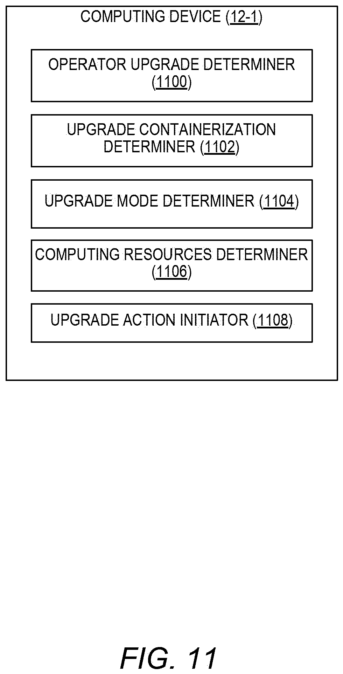

Figure 11 is a block diagram of a computing device suitable for implementing aspects illustrated in Figures 1-10 according to one example. The computing device 12-1 implements identical functionality as that described above with regard to the computing device 12 and executes a container orchestration system (COS). The computing device 12-1 includes an operator upgrade determiner 1100 to determine that an executing first operator process is to be upgraded to a second operator process in an upgrade process, wherein the first operator process maintains on a cluster of compute nodes a desired identified state of an application. In some implementations, the operator upgrade determiner 1100 determines that an executing first operator process is to be upgraded to a second operator process in an upgrade process by obtaining a resource file that corresponds to the first operator process, wherein the resource file is used to instantiate a resource; and determining, based on the resource, that a desired state of the resource differs from a current state of the resource. The operator upgrade determiner 1100 may comprise executable software instructions configured to program a processor device to implement the functionality of determining, by the COS, that an executing first operator process is to be upgraded to a second operator process in an upgrade process, wherein the first operator process maintains on a cluster of compute nodes a desired identified state of an application, may comprise circuitry including, by way of non-limiting example, an application-specific integrated circuit (ASIC), field-programmable gate array (FPGA), or may comprise a combination of executable software instructions and circuitry.

The computing device 12-1 also includes an upgrade containerization determiner 1102 to prior to initiate the second operator process, determine that the upgrade process will cause an initiation of a new container of the application to replace an existing container of the application. In some implementations, the upgrade containerization determiner 1102 determines that the upgrade process will cause an initiation of a new container of the application to replace an existing container of the application by obtaining a first file that corresponds to the first operator process and a second file that corresponds to the second operator process, wherein the first file identifies a container image for the existing container and the second file identifies a container image for the new container; and determining that the container image for the existing container and the container image for the new container differ. The upgrade containerization determiner 1102 may comprise executable software instructions configured to program a processor device to implement the functionality of prior to initiating the second operator process, determining that the upgrade process will cause an initiation of a new container of the application to replace an existing container of the application, may comprise circuitry including, by way of non-limiting example, an ASIC, FPGA, or may comprise a combination of executable software instructions and circuitry.

The computing device 12-1 also includes an upgrade mode determiner 1104 to determine that an upgrade mode associated with the first operator process is a rolling upgrade mode, wherein the existing container and the new container will execute concurrently for a period of time. In some implementations, the upgrade mode determiner 1104 determines that an upgrade mode associated with the first operator process is a rolling upgrade mode by obtaining a file that corresponds to the first operator process, wherein the file includes at least one deployment associated with the first operator process; and determining, based on the file, that the at least one deployment in the file comprises a rolling upgrade mode. The upgrade mode determiner 1104 may comprise executable software instructions configured to program a processor device to implement the functionality of determining that an upgrade mode associated with the first operator process is a rolling upgrade mode, wherein the existing container and the new container will execute concurrently for a period of time, may comprise circuitry including, by way of non-limiting example, an ASIC, FPGA, or may comprise a combination of executable software instructions and circuitry.

The computing device 12-1 also includes a computing resources determiner 1106 to make a determination whether computing resources needed to execute the existing container and the new container concurrently are available. In some implementations, the computing resources determiner 1106 makes a determination whether computing resources needed to execute the existing container and the new container concurrently are available by obtaining a first file that corresponds to the first operator process and identifies the existing container, wherein the first file identifies computing resources needed to execute the existing container; obtaining a second file that corresponds to the second operator process and identifies the new container, wherein the second file identifies computing resources needed to execute the new container; calculating an expected amount of computing resources, wherein the expected amount of computing resources comprises the computing resources needed to execute the existing container and the computing resources needed to execute the new container; identifying computing resources available in the cluster of compute nodes; and determining that the expected amount of computing resources is less than the computing resources available in the cluster of compute nodes. In some implementations, the computing resources determiner 1106 makes a determination whether computing resources needed to execute the existing container and the new container concurrently are available by obtaining a first file that corresponds to the first operator process and identifies the existing container, wherein the first file identifies computing resources needed to execute the existing container; obtaining a second file that corresponds to the second operator process and identifies the new container, wherein the second file identifies computing resources needed to execute the new container; calculating an expected amount of computing resources, wherein the expected amount of computing resources comprises the computing resources needed to execute the existing container and the computing resources needed to execute the new container; identifying computing resources available in the cluster of compute nodes; and determining that the expected amount of computing resources is greater than the computing resources available in the cluster of compute nodes. The computing resources determiner 1106 may comprise executable software instructions configured to program a processor device to implement the functionality of making a determination whether computing resources needed to execute the existing container and the new container concurrently are available, may comprise circuitry including, by way of non-limiting example, an ASIC, FPGA, or may comprise a combination of executable software instructions and circuitry.

The computing device 12-1 also includes an upgrade action initiator 1108 to take an upgrade request action based on the determination. In some implementations, the upgrade action initiator 1108 takes an upgrade request action based on the determination by performing an upgrade of the executing first operator process to the second operator process. In some implementations, the upgrade action initiator 1108 takes an upgrade request action based on the determination by stopping an upgrade of the executing first operator process to the second operator process. In some implementations, the upgrade action initiator 1108 takes an upgrade request action based on the determination by separating the upgrade of the executing first operator process to the second operator process into subsets; and performing each subset sequentially. The upgrade action initiator 1108 may comprise executable software instructions configured to program a processor device to implement the functionality of taking an upgrade request action based on the determination, may comprise circuitry including, by way of non-limiting example, an ASIC, FPGA, or may comprise a combination of executable software instructions and circuitry.

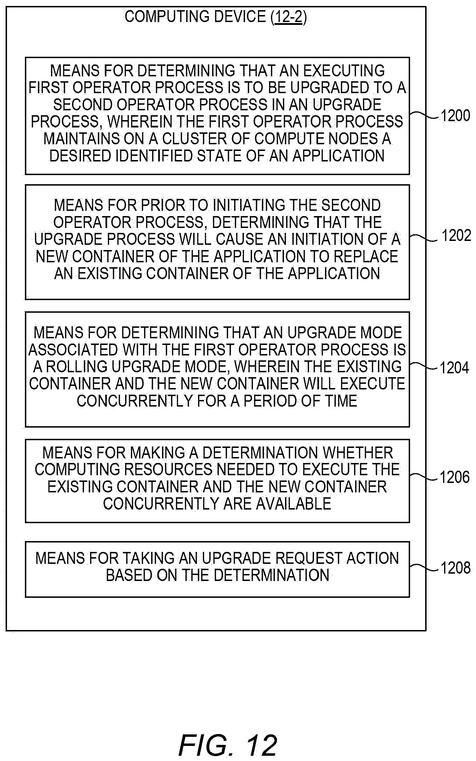

Figure 12 is a block diagram of a computing device 12-2 suitable for predictive resource measurement for operator process upgrades, according to one example. The computing device 12-2 implements identical functionality as that described above with regard to the computing device 12. In this implementation, the computing device 12-2 includes a means 1200 for determining that an executing first operator process is to be upgraded to a second operator process in an upgrade process, wherein the first operator process maintains on a cluster of compute nodes a desired identified state of an application. The means 1200 may, in some implementations, obtain a resource file that corresponds to the first operator process, wherein the resource file is used to instantiate a resource; and determine, based on the resource, that a desired state of the resource differs from a current state of the resource. The means 1200 may be implemented in any number of manners, including, for example via the operator upgrade determiner 1100 illustrated in Figure 11.

The computing device 12-2 also includes a means 1202 for prior to initiating the second operator process, determining that the upgrade process will cause an initiation of a new container of the application to replace an existing container of the application. The means 1202 may, in some implementations, obtain a first file that corresponds to the first operator process and a second file that corresponds to the second operator process, wherein the first file identifies a container image for the existing container and the second file identifies a container image for the new container; and determine that the container image for the existing container and the container image for the new container differ. The means 1202 may be implemented in any number of manners, including, for example via the upgrade containerization determiner 1102 illustrated in Figure 11.

The computing device 12-2 also includes a means 1204 for determining that an upgrade mode associated with the first operator process is a rolling upgrade mode, wherein the existing container and the new container will execute concurrently for a period of time. The means 1204 may, in some implementations, obtain a file that corresponds to the first operator process, wherein the file includes at least one deployment associated with the first operator process; and determine, based on the file, that the at least one deployment in the file comprises a rolling upgrade mode. The means 1204 may be implemented in any number of manners, including, for example via the upgrade mode determiner 1104 illustrated in Figure 11.

The computing device 12-2 also includes a means 1206 for making a determination whether computing resources needed to execute the existing container and the new container concurrently are available. The means 1206 may, in some implementations, obtain a first file that corresponds to the first operator process and identifies the existing container, wherein the first file identifies computing resources needed to execute the existing container; obtain a second file that corresponds to the second operator process and identifies the new container, wherein the second file identifies computing resources needed to execute the new container; calculate an expected amount of computing resources, wherein the expected amount of computing resources comprises the computing resources needed to execute the existing container and the computing resources needed to execute the new container; identify computing resources available in the cluster of compute nodes; and determine that the expected amount of computing resources is less than the computing resources available in the cluster of compute nodes. The means 1206 may, in some implementations, obtain a first file that corresponds to the first operator process and identifies the existing container, wherein the first file identifies computing resources needed to execute the existing container; obtain a second file that corresponds to the second operator process and identifies the new container, wherein the second file identifies computing resources needed to execute the new container; calculate an expected amount of computing resources, wherein the expected amount of computing resources comprises the computing resources needed to execute the existing container and the computing resources needed to execute the new container; identify computing resources available in the cluster of compute nodes; and determine that the expected amount of computing resources is greater than the computing resources available in the cluster of compute nodes. The means 1206 may be implemented in any number of manners, including, for example via the computing resources determiner 1106 illustrated in Figure 11.

The computing device 12-2 also includes a means 1208 for taking an upgrade request action based on the determination. The means 1208 may, in some implementations, perform an upgrade of the executing first operator process to the second operator process. The means 1208 may, in some implementations, stop an upgrade of the executing first operator process to the second operator process. The means 1208 may, in some implementations, separate the upgrade of the executing first operator process to the second operator process into subsets; and perform each subset sequentially. The means 1208 may be implemented in any number of manners, including, for example via the upgrade action initiator 1108 illustrated in Figure 11.

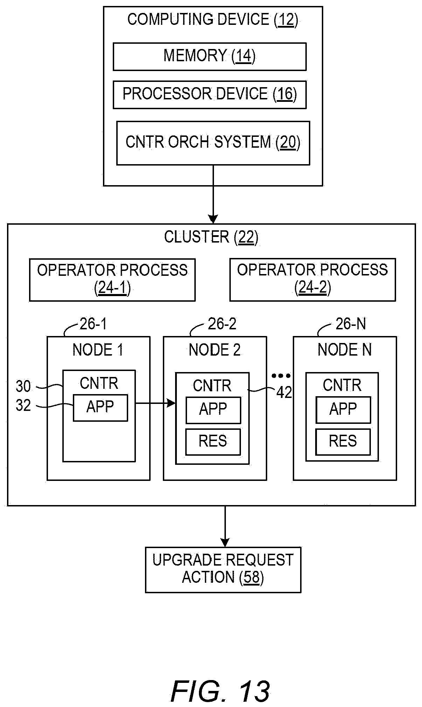

Figure 13 is a block diagram of the runtime environment of Figure 1 for predictive resource measurement for operator process upgrades, according to one example. Elements of Figure 1 are referenced in describing Figure 13 for the sake of clarity. In the example of Figure 13, the runtime environment 10 includes a computing device 12 that comprises a system memory 14 and a processor device 16 coupled to the system memory 14, and the container orchestration system 20. The processor device 16 is to determine that an executing first operator process 24-1 is to be upgraded to a second operator process 24-2 in an upgrade process, wherein the first operator process 24-1 maintains on a cluster 22 of compute nodes 26-1 - 26-N a desired identified state of an application 32. The processor device 16 is further to prior to initiate the second operator process 24-2, determine that the upgrade process will cause an initiation of a new container 42 of the application 32 to replace an existing container 30 of the application 32. The processor device 16 is further to determine that an upgrade mode associated with the first operator process 24-1 is a rolling upgrade mode, wherein the existing container 30 and the new container 42 will execute concurrently for a period of time. The processor device 16 is further to make a determination whether computing resources needed to execute the existing container 30 and the new container 42 concurrently are available. The processor device 16 is further to take an upgrade request action 58 based on the determination.

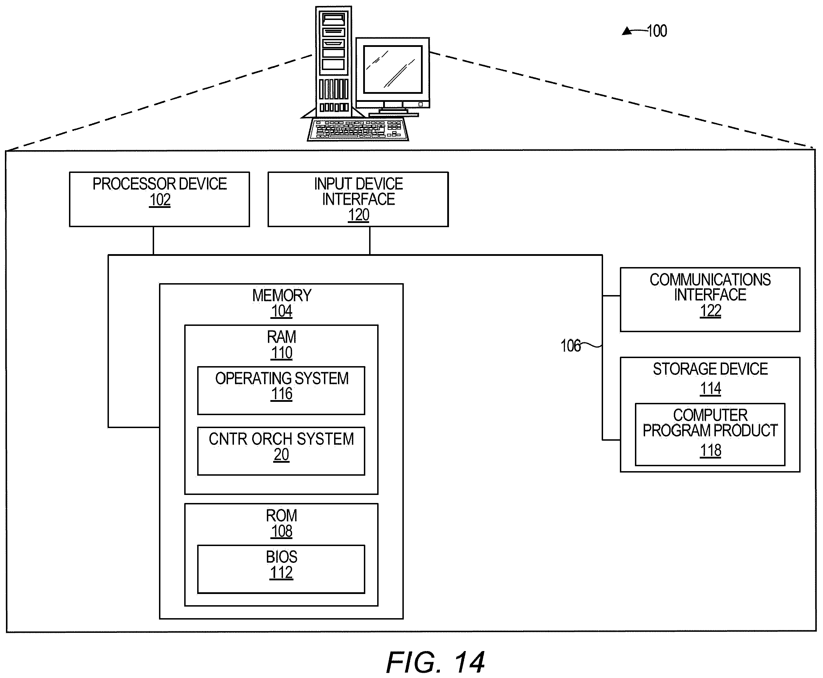

Figure 14 is a block diagram of a computing device 100, such as the computing device 12, suitable for implementing examples, according to one example. The computing device 100 may comprise any computing or electronic device capable of including firmware, hardware, and/or executing software instructions to implement the functionality described herein, such as a computer server, a desktop computing device, a laptop computing device, or the like. The computing device 100 includes a processor device, 102, such as the processor device 16, a system memory 104, such as the system memory 14, and a system bus 106. The system bus 106 provides an interface for system components including, but not limited to, the system memory 104 and the processor device 102. The processor device 102 can be any commercially available or proprietary processor.

The system bus 106 may be any of several types of bus structures that may further interconnect to a memory bus (with or without a memory controller), a peripheral bus, and/or a local bus using any of a variety of commercially available bus architectures. The system memory 104 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)). A basic input/output system (BIOS) 112 may be stored in the non-volatile memory 108 and can include the basic routines that help to transfer information between elements within the computing device 100. The volatile memory 110 may also include a high-speed RAM, such as static RAM, for caching data.

The computing device 100 may further include or be coupled to a non-transitory computer-readable storage medium such as a storage device 114, such as the storage device 18, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like. Although the description of computer-readable media above refers to an HDD, it should be appreciated that other types of media that are readable by a computer, such as Zip disks, magnetic cassettes, flash memory cards, cartridges, and the like, may also be used in the operating environment, and, further, that any such media may contain computer-executable instructions for performing novel methods of the disclosed examples.

A number of modules can be stored in the storage device 114 and in the volatile memory 110, including an operating system 116 and one or more program modules, such as the container orchestration system 20, which may implement the functionality described herein in whole or in part. All or a portion of the examples may be implemented as a computer program product 118 stored on a transitory or non-transitory computer-usable or computer-readable storage medium, such as the storage device 114, which includes complex programming instructions, such as complex computer-readable program code, to cause the processor device 102 to carry out the steps described herein. Thus, the computer-readable program code can comprise software instructions for implementing the functionality of the examples described herein when executed on the processor device 102. The processor device 102, in conjunction with the container orchestration system 20 in the volatile memory 110, may serve as a controller, or control system, for the computing device 100 that is to implement the functionality described herein.

An operator, such as a user, may also be able to enter one or more configuration commands through a keyboard (not illustrated), a pointing device such as a mouse (not illustrated), or a touch-sensitive surface such as a display device (not illustrated). Such input devices may be connected to the processor device 102 through an input device interface 120 that is coupled to the system bus 106 but can be connected by other interfaces such as a parallel port, an Institute of Electrical and Electronic Engineers (IEEE) 1394 serial port, a Universal Serial Bus (USB) port, an IR interface, and the like. The computing device 100 may also include a communications interface 122 suitable for communicating with the network as appropriate or desired. The computing device 100 may also include a video port (not illustrated) configured to interface with the display device (not illustrated), to provide information to the user.

Other computer system designs and configurations may also be suitable to implement the systems and methods described herein. The following examples illustrate various implementations in accordance with one or more aspects of the disclosure.

Example 1 is a method comprising determining, by a container orchestration system (COS) executing on a computing device, that an executing first operator process is to be upgraded to a second operator process in an upgrade process, wherein the first operator process maintains on a cluster of compute nodes a desired identified state of an application; prior to initiating the second operator process, determining, by the COS, that the upgrade process will cause an initiation of a new container of the application to replace an existing container of the application; and determining, by the COS, that an upgrade mode associated with the first operator process is a rolling upgrade mode, wherein the existing container and the new container will execute concurrently for a period of time.

Example 2 is the method of example 1, further comprising: subsequent to determining that an upgrade mode associated with the first operator process is a rolling upgrade mode, obtaining a first file that corresponds to the first operator process, wherein the first file includes a plurality of deployments associated with the first operator process; determining, based on the first file, a deployment of the plurality of deployments that needs more computing resources than other deployments of the plurality of deployments; determining an expected amount of computing resources needed to perform the upgrade process, wherein the expected amount of computing resources comprises computing resources needed for the deployment of the plurality of deployments that needs more computing resources than other deployments of the plurality of deployments; and identifying computing resources available in the cluster.

Example 3 is the method of example 2, further comprising: determining that the expected amount of computing resources needed to perform the upgrade process is less than the computing resources available in the cluster; and performing the upgrade process.

Example 4 is the method of example 2, further comprising: determining that the expected amount of computing resources needed to perform the upgrade process is greater than the computing resources available in the cluster; and stopping the upgrade process.

Example 5 is the method of example 1, further comprising: subsequent to determining that an upgrade mode associated with the first operator process is a rolling upgrade mode, obtaining information corresponding to at least one prior upgrade of the first operator process, wherein the information comprises computing resources utilized during the at least one prior upgrade process; determining, based on the information, an expected amount of computing resources needed to perform the upgrade process; and identifying computing resources available in the cluster.

Example 6 is the method of example 5, further comprising: determining that the expected amount of computing resources needed to perform the upgrade process is less than the computing resources available in the cluster; and performing the upgrade to the operator.

Example 7 is the method of example 5, further comprising: determining that the expected amount of computing resources needed to perform the upgrade process is greater than the computing resources available in the cluster; and stopping the upgrade process.

Example 8 is a computing device that includes a memory and a processor device coupled to the memory. The processor device is to determine that an executing first operator process is to be upgraded to a second operator process in an upgrade process, wherein the first operator process maintains on a cluster of compute nodes a desired identified state of an application; prior to initiate the second operator process, determine that the upgrade process will cause an initiation of a new container of the application to replace an existing container of the application; and determine that an upgrade mode associated with the first operator process is a rolling upgrade mode, wherein the existing container and the new container will execute concurrently for a period of time.

Example 9 is the computing device of example 8, wherein the processor device is further to: subsequent to determining that an upgrade mode associated with the first operator process is a rolling upgrade mode, obtaining a first file that corresponds to the first operator process, wherein the first file includes a plurality of deployments associated with the first operator process; determine, based on the first file, a deployment of the plurality of deployments that needs more computing resources than other deployments of the plurality of deployments; determine an expected amount of computing resources needed to perform the upgrade process, wherein the expected amount of computing resources comprises computing resources needed for the deployment of the plurality of deployments that needs more computing resources than other deployments of the plurality of deployments; and identify computing resources available in the cluster.

Example 10 is the computing device of example 9, wherein the processor device is further to: determine that the expected amount of computing resources needed to perform the upgrade process is less than the computing resources available in the cluster; and perform the upgrade process.

Example 11 is the computing device of example 9, wherein the processor device is further to: determine that the expected amount of computing resources needed to perform the upgrade process is greater than the computing resources available in the cluster; and stop the upgrade process.

Example 12 is the computing device of example 8, wherein the processor device is further to: subsequent to determine that an upgrade mode associated with the first operator process is a rolling upgrade mode, obtain information corresponding to at least one prior upgrade of the first operator process, wherein the information comprises computing resources utilized during the at least one prior upgrade process; determine, based on the information, an expected amount of computing resources needed to perform the upgrade process; and identify computing resources available in the cluster.

Example 13 is the computing device of example 12, wherein the processor device is further to: determine that the expected amount of computing resources needed to perform the upgrade process is less than the computing resources available in the cluster; and perform the upgrade to the operator.

Example 14 is the computing device of example 12, wherein the processor device is further to: determine that the expected amount of computing resources needed to perform the upgrade process is greater than the computing resources available in the cluster; and stop the upgrade process.

Example 15 is a non-transitory computer-readable storage medium that includes computer-executable instructions that, when executed, cause one or more processor devices to determine that an executing first operator process is to be upgraded to a second operator process in an upgrade process, wherein the first operator process maintains on a cluster of compute nodes a desired identified state of an application; prior to initiate the second operator process, determine that the upgrade process will cause an initiation of a new container of the application to replace an existing container of the application; and determine that an upgrade mode associated with the first operator process is a rolling upgrade mode, wherein the existing container and the new container will execute concurrently for a period of time.

Example 16 is the non-transitory computer-readable storage medium of example 15, wherein the instructions are further to cause the processor device to: subsequent to determine that an upgrade mode associated with the first operator process is a rolling upgrade mode, obtain a first file that corresponds to the first operator process, wherein the first file includes a plurality of deployments associated with the first operator process; determining, based on the first file, a deployment of the plurality of deployments that needs more computing resources than other deployments of the plurality of deployments; determine, based on the first file, a deployment of the plurality of deployments that needs more computing resources than other deployments of the plurality of deployments; determine an expected amount of computing resources needed to perform the upgrade process, wherein the expected amount of computing resources comprises computing resources needed for the deployment of the plurality of deployments that needs more computing resources than other deployments of the plurality of deployments; and identify computing resources available in the cluster.

Example 17 is the non-transitory computer-readable storage medium of example 16, wherein the instructions are further to cause the processor device to: determine that the expected amount of computing resources needed to perform the upgrade process is less than the computing resources available in the cluster; and perform the upgrade process.

Example 18 is the non-transitory computer-readable storage medium of example 16, wherein the instructions are further to cause the processor device to: determine that the expected amount of computing resources needed to perform the upgrade process is greater than the computing resources available in the cluster; and stop the upgrade process.

Individuals will recognize improvements and modifications to the preferred examples of the disclosure. All such improvements and modifications are considered within the scope of the concepts disclosed herein and the claims that follow.

## Claims

1. A method, comprising:
determining, by a container orchestration system (COS) executing on a computing device, that an executing first operator process is to be upgraded to a second operator process in an upgrade process, wherein the first operator process maintains on a cluster of compute nodes a desired identified state of an application;
prior to initiating the second operator process, determining, by the COS, that the upgrade process will cause an initiation of a new container of the application to replace an existing container of the application;
determining, by the COS, that an upgrade mode associated with the first operator process is a rolling upgrade mode, wherein the existing container and the new container will execute concurrently for a period of time;
making a determination, by the COS, whether computing resources needed to execute the existing container and the new container concurrently are available; and
taking, by the COS, an upgrade request action based on the determination.

2. The method of claim 1, wherein determining, by the COS executing on a computing device, that an executing first operator process is to be upgraded to a second operator process in an upgrade process comprises:
obtaining a resource file that corresponds to the first operator process, wherein the resource file is used to instantiate a resource; and
determining, based on the resource, that a desired state of the resource differs from a current state of the resource.

3. The method of claim 1, wherein determining, by the COS, that the upgrade process will cause an initiation of a new container of the application to replace an existing container of the application comprises:
obtaining a first file that corresponds to the first operator process and a second file that corresponds to the second operator process, wherein the first file identifies a container image for the existing container and the second file identifies a container image for the new container; and
determining that the container image for the existing container and the container image for the new container differ.

4. The method of claim 3, wherein the first file includes at least one deployment associated with the first operator process that includes the container image for the existing container; and wherein the second file includes at least one deployment associated with the second operator process that includes the container image for the new container.

5. The method of claim 3, wherein obtaining a first file that corresponds to the first operator process and a second file that corresponds to the second operator process comprises sending the first file and the second file to an operator manager platform.

6. The method of claim 1, wherein determining that an upgrade mode associated with the first operator process is a rolling upgrade mode comprises:
obtaining a file that corresponds to the first operator process, wherein the file includes at least one deployment associated with the first operator process; and
determining, based on the file, that the at least one deployment in the file comprises a rolling upgrade mode.

7. The method of claim 1, wherein making a determination whether computing resources needed to execute the existing container and the new container concurrently are available comprises:
obtaining a first file that corresponds to the first operator process and identifies the existing container, wherein the first file identifies computing resources needed to execute the existing container;
obtaining a second file that corresponds to the second operator process and identifies the new container, wherein the second file identifies computing resources needed to execute the new container;
calculating an expected amount of computing resources, wherein the expected amount of computing resources comprises the computing resources needed to execute the existing container and the computing resources needed to execute the new container;
identifying computing resources available in the cluster of compute nodes; and
determining if the expected amount of computing resources is less than or greater than the computing resources available in the cluster of compute nodes.

8. The method of claim 7, wherein identifying computing resources available in the cluster of compute nodes comprises:
identifying each container in the cluster of compute nodes, wherein the cluster of compute nodes comprises a plurality of containers;
determining computing resources needed for each container in the cluster of compute nodes;
determining computing resources provisioned for each node of the compute nodes, wherein each container in the cluster of compute nodes is hosted on at least one node of the cluster of compute nodes; and
calculating a difference between the computing resources provisioned for each node of the compute nodes and the computing resources needed for each container in the cluster of compute nodes, wherein the computing resources available in the cluster of compute nodes comprises the difference between the computing resources provisioned for each node of the compute nodes and the computing resources needed for each container in the cluster of compute nodes.

9. The method of claim 7 or 8, wherein, in response to determining that the expected amount of computing resources is less than the computing resources available in the cluster of compute nodes:
taking an upgrade request action based on the determination comprises performing an upgrade of the executing first operator process to the second operator process, and
the upgrade request action comprises performing the upgrade of the executing first operator process to the second operator process.

10. The method of claim 7 or claim 8, wherein, in response to determining that the expected amount of computing resources is greater than the computing resources available in the cluster of compute nodes, taking an upgrade request action based on the determination comprises:
stopping an upgrade of the executing first operator process to the second operator process, wherein the upgrade request action comprises stopping the upgrade of the executing first operator process to the second operator process;
and optionally sending an alert that indicates that there are insufficient computing resources to perform the upgrade of the executing first operator process to the second operator process.

11. The method of claim 7 or claim 8, further comprising, in response to determining that the expected amount of computing resources is greater than the computing resources available in the cluster of compute nodes, either:
(i) separating the upgrade of the executing first operator process to the second operator process into subsets;
wherein taking an upgrade request action based on the determination comprises performing each subset sequentially, and the upgrade request action comprises performing each subset sequentially;
or:
(ii) obtaining a file that corresponds to the first operator process, wherein the file includes at least one deployment associated with the first operator process;
updating the file to identify that the at least one deployment in the file comprises a recreate upgrade mode, wherein the existing container will terminate before the new container will execute; and
determining that the existing container terminated;
wherein taking an upgrade request action based on the determination comprises performing an upgrade of the executing first operator process to the second operator process, and the upgrade request action comprises performing the upgrade of the executing first operator process to the second operator process.

12. The method of claim 7 or claim 8, further comprising, in response to determining that the expected amount of computing resources is greater than the computing resources available in the cluster of compute nodes:
determining a difference between the expected amount of computing resources and the computing resources available in the cluster of compute nodes;
requesting a new compute node with computing resources of at least the difference between the expected amount of computing resources and the computing resources available in the cluster of compute nodes; and
provisioning the new compute node in the cluster of compute nodes;
wherein taking an upgrade request action based on the determination comprises performing an upgrade of the executing first operator process to the second operator process, and the upgrade request action comprises performing the upgrade of the executing first operator process to the second operator process.

13. The method of claim 12, further comprising:
subsequent to performing the upgrade of the executing first operator process to the second operator process, determining that the computing resources available in the cluster of compute nodes exceed an amount of computing resources needed for the cluster of compute nodes;
determining that the new compute node can be removed from the cluster of compute nodes; and
removing the new compute node from the cluster of compute nodes.

14. A computing device, comprising:
a memory; and
a processor device coupled to the memory, the processor device configured to carry out the method of any of claims 1-13.

15. A non-transitory computer-readable storage medium that includes computer-executable instructions that, when executed, cause one or more processor devices to carry out the method of any of claims 1-13.
